(19) Europäisches Patentamt
European Patent Office
Office européen des brevets

(11) **EP 3 951 924 A1**

(12) **EUROPEAN PATENT APPLICATION**
published in accordance with Art. 153(4) EPC

(43) Date of publication:
**09.02.2022 Bulletin 2022/06**

(21) Application number: **20778206.1**

(22) Date of filing: **17.03.2020**

(51) International Patent Classification (IPC):
***H01M 4/13*** *(2010.01)* ***H01M 4/139*** *(2010.01)*
***H01M 4/62*** *(2006.01)* ***H01G 11/06*** *(2013.01)*
***H01G 11/38*** *(2013.01)*

(52) Cooperative Patent Classification (CPC):
**H01G 11/06; H01G 11/38; H01M 4/13; H01M 4/139; H01M 4/62;** Y02E 60/10

(86) International application number:
**PCT/JP2020/011818**

(87) International publication number:
**WO 2020/196114 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2019 JP 2019059181**

(71) Applicant: **Zeon Corporation**
**Tokyo 100-8246 (JP)**

(72) Inventors:
- **MESUDA Maki**
  **Tokyo 100-8246 (JP)**
- **SONOBE Kenya**
  **Tokyo 100-8246 (JP)**
- **ISSHIKI Yasuhiro**
  **Tokyo 100-8246 (JP)**

(74) Representative: **Parchmann, Stefanie**
**Maiwald Patentanwalts- und Rechtsanwaltsgesellschaft mbH**
**Elisenhof**
**Elisenstraße 3**
**80335 München (DE)**

(54) **COMPOSITE PARTICLES FOR ELECTROCHEMICAL ELEMENT FUNCTIONAL LAYERS, BINDER COMPOSITION FOR ELECTROCHEMICAL ELEMENT FUNCTIONAL LAYERS, CONDUCTIVE MATERIAL PASTE FOR ELECTRODE MIXTURE LAYERS, SLURRY FOR ELECTRODE MIXTURE LAYERS, ELECTRODE FOR ELECTROCHEMICAL ELEMENTS, AND ELECTROCHEMICAL ELEMENT**

(57) Provided is a new technique related to electrochemical devices that can sufficiently ensure adhesiveness of a functional layer and safety of an electrochemical device while, on the other hand, causing an electrochemical device to display excellent high-temperature storage characteristics. A composite particle for an electrochemical device functional layer includes a core particle containing a melamine compound and a shell polymer that at least partially covers an outer surface of the core particle and that includes at least one selected from the group consisting of a nitrile group, a carboxy group, a hydroxyl group, a sulfo group, an aldehyde group, and an amide group.

FIG. 1

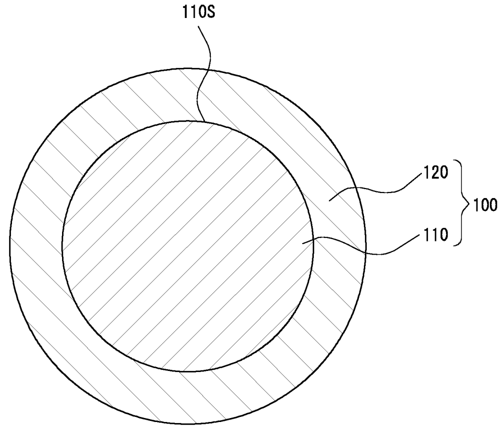


EP 3 951 924 A1

## Description

TECHNICAL FIELD

The present disclosure relates to a composite particle for an electrochemical device functional layer, a binder composition for an electrochemical device functional layer, a conductive material paste for an electrode mixed material layer, a slurry for an electrode mixed material layer, an electrode for an electrochemical device, and an electrochemical device.

BACKGROUND

Electrochemical devices such as lithium ion secondary batteries, electric double-layer capacitors, and lithium ion capacitors have characteristics such as compact size, light weight, high energy-density, and the ability to be repeatedly charged and discharged, and are used in a wide range of applications. An electrochemical device typically includes device members such as a plurality of electrodes and a separator that isolates these electrodes from each other and prevents internal short-circuiting.

There are instances in which a member including a functional layer that contains a binder capable of imparting adhesiveness and optionally contains particles compounded in order to cause the member to display a desired function (hereinafter, referred to as "functional particles") is used as a device member of an electrochemical device.

Specifically, a separator that includes an adhesive layer containing a binder and/or a porous membrane layer containing a binder and non-conductive particles as functional particles on a separator substrate may be used as a separator of an electrochemical device. Moreover, an electrode that includes an electrode mixed material layer containing a binder and electrode active material particles as functional particles on a current collector or an electrode that further includes an adhesive layer and/or porous membrane layer such as described above on an electrode substrate including an electrode mixed material layer on a current collector may be used as an electrode of an electrochemical device.

Attempts have been made to improve separators used as device members in order to prevent internal short-circuiting and ensure safety of electrochemical devices. As one example, Patent Literature (PTL) 1 reports that the safety of an electrochemical device can be increased by using a separator for an electrochemical device that includes a plurality of specific separator layers.

CITATION LIST

Patent Literature

PTL 1: JP2016-181324A

SUMMARY

(Technical Problem)

Diversification of applications and the like of electrochemical devices in recent years has led to demand for new techniques that can inhibit thermal runaway such as abnormal heat release and ignition caused by short-circuiting between electrodes and can ensure a higher level of safety.

In response to this demand, the inventors have studied a technique of including an organic compound that undergoes decomposition at high temperature to release incombustible gas (nitrogen, carbon dioxide, carbon monoxide, ammonia, water vapor, etc.) in a functional layer that is a constituent of a device member in an electrochemical device. Through the inclusion of such an organic compound in a functional layer, incombustible gas can be released and thermal runaway can be inhibited even in a situation in which the inside of an electrochemical device reaches an abnormally high temperature due to short-circuiting between electrodes.

In addition, the inventors have attempted to form a functional layer on a substrate by applying a slurry having an organic compound such as described above and a binder dispersed and/or dissolved in a solvent, and then drying the coating film. However, this revealed a problem that although a device member including a functional layer obtained as described above can impart sufficient safety to an electrochemical device, there are cases in which the capacity of an electrochemical device including the device member decreases upon long-term storage at high temperature (i.e., has poor high-temperature storage characteristics).

Accordingly, an object of the present disclosure is to provide a new technique relating to electrochemical devices that can sufficiently ensure adhesiveness of a functional layer and safety of an electrochemical device while, on the other hand, causing an electrochemical device to display excellent high-temperature storage characteristics.

(Solution to Problem)

The inventors conducted diligent investigation with the aim of solving the problems set forth above. The inventors focused on using a melamine compound as an organic compound that decomposes at high temperature to release incombustible gas. The inventors discovered that a functional layer having excellent adhesiveness is obtained by forming the functional layer using composite particles in which a specific polymer partially or completely covers the outer surface of a particle containing a melamine compound, and that a device member including this functional layer can sufficiently ensure safety of an electrochemical device while also improving high-temperature storage characteristics of the electrochemical device. In this manner, the inventors completed the present disclosure.

Specifically, the present disclosure aims to advantageously solve the problems set forth above, a presently disclosed composite particle for an electrochemical device functional layer comprises: a core particle containing a melamine compound; and a shell polymer that at least partially covers an outer surface of the core particle and that includes at least one selected from the group consisting of a nitrile group, a carboxy group, a hydroxyl group, a sulfo group, an aldehyde group, and an amide group. By using composite particles having a core-shell structure in which the outer surface of a core particle containing a melamine compound is covered by a shell polymer including at least any one of the functional groups set forth above in this manner, it is possible to form a functional layer having excellent adhesiveness, and by using a device member that includes this functional layer, it is possible to produce an electrochemical device that has sufficiently ensured safety and excellent high-temperature storage characteristics.

In the presently disclosed composite particle for an electrochemical device functional layer, the shell polymer preferably has a degree of swelling in electrolyte solution of not less than 100 mass% and not more than 600 mass%. Note that the "degree of swelling in electrolyte solution" is the degree of swelling upon 72 hours of immersion in a 60°C electrolyte solution for measurement. The electrolyte solution for measurement is a solution obtained by dissolving $LiPF_6$ with a concentration of 1.0 mol/L in a mixed solvent obtained by further adding 2 volume% of vinylene carbonate to a mixed liquid in which ethylene carbonate and diethyl carbonate are mixed with a mass ratio of ethylene carbonate/diethyl carbonate = 3/7. When the degree of swelling of the shell polymer upon 72 hours of immersion at 60°C in the specific electrolyte solution for measurement set forth above is within the range set forth above, high-temperature storage characteristics of an electrochemical device can be further improved.

The measurement method of the "degree of swelling in electrolyte solution" referred to in the present disclosure may, more specifically, be a method described in the EXAMPLES section of the present specification.

The presently disclosed composite particle for an electrochemical device functional layer preferably has an initial thermal decomposition temperature of not lower than 120°C and not higher than 500°C. When the initial thermal decomposition temperature of the composite particle is within the range set forth above, adhesiveness of a functional layer can be further improved while also even better ensuring safety of an electrochemical device.

The "initial thermal decomposition temperature" referred to in the present disclosure can be measured using a method described in the EXAMPLES section of the present specification.

Moreover, the present disclosure aims to advantageously solve the problems set forth above, and a presently disclosed binder composition for an electrochemical device functional layer comprises: any one of the presently disclosed composite particles for an electrochemical device functional layer set forth above; and a solvent. By using a binder composition that contains any one of the composite particles set forth above and a solvent, it is possible to form a functional layer having excellent adhesiveness, and by using a device member that includes this functional layer, it is possible to produce an electrochemical device that has sufficiently ensured safety and excellent high-temperature storage characteristics.

The presently disclosed binder composition for an electrochemical device functional layer preferably further comprises a binder for a functional layer. By using a binder composition that further contains a binder for a functional layer, it is possible to further improve adhesiveness of a functional layer.

In the presently disclosed binder composition for an electrochemical device functional layer, the binder for a functional layer is preferably a polymer including at least one selected from the group consisting of a carboxy group, a hydroxyl group, a nitrile group, an amino group, an epoxy group, an oxazoline group, an isocyanate group, a sulfo group, an ester group, and an amide group. By using a polymer that includes at least any one of the functional groups set forth above as the binder for a functional layer, it is possible to even further improve adhesiveness of a functional layer.

Furthermore, the present disclosure aims to advantageously solve the problems set forth above, and a presently disclosed conductive material paste for an electrode mixed material layer comprises: any one of the presently disclosed binder compositions for an electrochemical device functional layer set forth above; and a conductive material. By using a conductive material paste that contains any one of the binder compositions set forth above and a conductive material, it is possible to form an electrode mixed material layer having excellent adhesiveness, and by using an electrode that includes this electrode mixed material layer, it is possible to produce an electrochemical device that has sufficiently ensured safety and excellent high-temperature storage characteristics.

Also, the present disclosure aims to advantageously solve the problems set forth above, and a presently

disclosed slurry for an electrode mixed material layer comprises: the presently disclosed conductive material paste for an electrode mixed material layer set forth above; and electrode active material particles. By using a slurry that contains the conductive material paste set forth above and electrode active material particles, it is possible to form an electrode mixed material layer having excellent adhesiveness, and by using an electrode that includes this electrode mixed material layer, it is possible to produce an electrochemical device that has sufficiently ensured safety and excellent high-temperature storage characteristics.

Moreover, the present disclosure aims to advantageously solve the problems set forth above, and a presently disclosed electrode for an electrochemical device comprises an electrode mixed material layer on a current collector, wherein the electrode mixed material layer is a dried product of the presently disclosed slurry for an electrode mixed material layer set forth above. An electrode mixed material layer that is formed of a dried product of the slurry for an electrode mixed material layer set forth above is capable of strong close adherence to a current collector, and by using an electrode that includes this electrode mixed material layer, it is possible to produce an electrochemical device that has sufficiently ensured safety and excellent high-temperature storage characteristics.

Furthermore, the present disclosure aims to advantageously solve the problems set forth above, and a presently disclosed electrochemical device comprises the presently disclosed electrode for an electrochemical device set forth above. An electrochemical device that includes the electrode set forth above has sufficiently ensured safety and excellent high-temperature storage characteristics.

(Advantageous Effect)

According to the present disclosure, it is possible to provide a composite particle for an electrochemical device functional layer and a binder composition for an electrochemical device functional layer that can sufficiently ensure adhesiveness of a functional layer and safety of an electrochemical device while, on the other hand, causing an electrochemical device to display excellent high-temperature storage characteristics.

Moreover, according to the present disclosure, it is possible to provide a conductive material paste for an electrode mixed material layer and a slurry for an electrode mixed material layer that can sufficiently ensure adhesiveness of an electrode mixed material layer and safety of an electrochemical device while, on the other hand, causing an electrochemical device to display excellent high-temperature storage characteristics.

Furthermore, according to the present disclosure, it is possible to provide an electrode for an electrochemical device that can sufficiently ensure safety of an electrochemical device while, on the other hand, causing an electrochemical device to display excellent high-temperature storage characteristics.

Also, according to the present disclosure, it is possible to provide an electrochemical device that has sufficiently ensured safety and excellent high-temperature storage characteristics.

BRIEF DESCRIPTION OF THE DRAWING

In the accompanying drawing,

FIG. 1 is a cross-sectional view schematically illustrating the structure of one example of a presently disclosed composite particle.

DETAILED DESCRIPTION

The following provides a detailed description of embodiments of the present disclosure.

The presently disclosed composite particle for an electrochemical device functional layer is for use in production of a functional layer (electrode mixed material layer, porous membrane layer, adhesive layer, etc.) of an electrochemical device and can, for example, be used to produce the presently disclosed binder composition for an electrochemical device functional layer.

The presently disclosed binder composition for an electrochemical device functional layer can be used in production of the presently disclosed conductive material paste for an electrode mixed material layer, for example.

The presently disclosed conductive material paste for an electrode mixed material layer can be used in production of the presently disclosed slurry for an electrode mixed material layer.

The presently disclosed electrode for an electrochemical device can be used as an electrode of an electrochemical device such as a lithium ion secondary battery, an electric double-layer capacitor, or a lithium ion capacitor, and is an electrode that includes an electrode mixed material layer formed using the presently disclosed slurry for an electrode mixed material layer.

The presently disclosed electrochemical device includes the presently disclosed electrode for an electrochemical device.

(Composite particle for electrochemical device functional layer)

The presently disclosed composite particle includes a core particle and a shell polymer that is adhered (physically and/or chemically) to the core particle such as to at least partially cover an outer surface of the core particle. In the presently disclosed composite particle, the core particle contains a melamine compound, and the shell polymer includes at least one functional group selected from the group consisting of a nitrile group, a carboxy group, a hydroxyl group, a sulfo group, an aldehyde group, and an amide group (hereinafter, these functional groups are also referred to collectively using the term "shell functional group").

As a result of the presently disclosed composite particle having a core-shell structure in which a core particle containing a melamine compound is covered by a shell polymer including any of the shell functional groups described above, the presently disclosed composite particle can be used to produce a functional layer that has excellent adhesiveness and an electrochemical device that has sufficiently ensured safety and excellent high-temperature storage characteristics.

Although it is not clear why the effects described above are displayed through use of the presently disclosed composite particle, the reason for this is presumed to be as follows.

Firstly, when the presently disclosed composite particle is used to form a functional layer, the obtained functional layer can be caused to display excellent adhesiveness as a result of binding capacity of the melamine compound contained in the core particle and binding capacity of the shell functional group included in the shell polymer. Moreover, the melamine compound contained in the core particle not only contributes to improving adhesiveness of a functional layer, but can also decompose to release incombustible gas when the inside of an electrochemical device reaches an abnormally high temperature. Consequently, even when the inside of an electrochemical device including a functional layer formed using the presently disclosed composite particle reaches an abnormally high temperature due to short-circuiting between electrodes, incombustible gas can be released from the melamine compound, and thermal runaway can be inhibited. On the other hand, the melamine compound contained in the core particle has a tendency to cause an unintended chemical reaction upon coming into contact with electrolyte solution. In response to this issue, the outer surface of the core particle containing the melamine compound is at least partially covered by the shell polymer in the presently disclosed composite particle such that contact between the melamine compound and electrolyte solution is inhibited in a situation in which the presently disclosed composite particle is used to form a functional layer. This can suppress a chemical reaction that can occur between the melamine compound and electrolyte solution inside an electrochemical device and can sufficiently ensure high-temperature storage characteristics of the electrochemical device.

Note that the presently disclosed composite particle is preferably used in production of an electrode mixed material layer, in particular, as a functional layer. When the composite particle containing the melamine compound is disposed in an electrode mixed material layer, the melamine compound can act in proximity to a conductive material and electrode active material particles that are thermally unstable and release oxygen, which is a combustible substance. This makes it possible to cause rapid breakdown of electrode structure and severing of conduction paths, and thus can even better ensure a high level of safety of an electrochemical device.

<Core-shell structure>

The presently disclosed composite particle has the core-shell structure set forth above that includes a core portion and a shell portion. In the core-shell structure, the shell polymer constituting the shell portion may completely cover or partially cover the outer surface of the core particle constituting the core portion.

FIG. 1 illustrates one example of the cross-sectional structure of the composite particle for a case in which the shell polymer completely covers the outer surface of the core particle. A composite particle 100 illustrated in FIG. 1 has a core-shell structure including a core particle 110 as a core portion and a shell polymer 120 as a shell portion. The core particle 110 is present further inward than the shell polymer 120 in the composite particle 100. The shell polymer 120 covers an outer surface 110S of the core particle 110 and is normally present furthest outward in the composite particle 100. In FIG. 1, the shell polymer 120 completely covers the outer surface 110S of the core particle 110.

<Core particle>

The core particle forming the core portion of the presently disclosed composite particle contains at least a melamine compound and may contain components other than the melamine compound (i.e., other compounds). In other words, the core particle may be a particle that is composed of only the melamine compound or may be a particle that contains the melamine compound and one or more other compounds.

«Melamine compound»

Examples of the melamine compound include melamine, derivatives of melamine, and salts of melamine and derivatives thereof. The melamine or derivative of melamine may, for example, be a compound represented by the following formula (I).

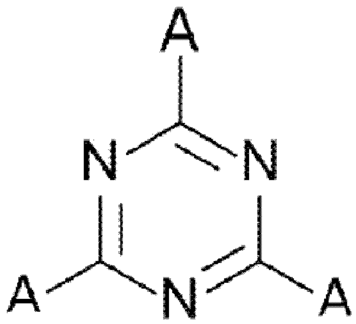

(I)

In formula (I), each A represents, independently of one another, a hydroxyl group or $-NR^1R^2$ ($R^1$ and $R^2$ each represent, independently of one another, a hydrogen atom, a hydrocarbon group, or a hydroxyl group-containing hydrocarbon group; when more than one $R^1$ is present in formula (I), each $R^1$ may be the same or different; and when more than one $R^2$ is present in formula (I), each $R^2$ may be the same or different).

Note that when the hydrocarbon group and the hydroxyl group-containing hydrocarbon group of $R^1$ and $R^2$ include two or more carbon atoms, these groups may have one or more oxygen atoms (-O-) interposed between carbon atoms (however, when two or more oxygen atoms are interposed, these oxygen atoms are not adjacent to one another). The number of carbon atoms in the hydrocarbon group and the hydroxyl group-containing hydrocarbon group of $R^1$ and $R^2$ is not specifically limited but is preferably not less than 1 and not more than 5.

Moreover, examples of salts of melamine and derivatives of melamine include, but are not specifically limited to, sulfates, cyanurates, and polyphosphates.

The melamine compound is preferably melamine, ammeline, ammelide, or a salt of any thereof with cyanuric acid from a viewpoint of further improving adhesiveness of a functional layer, and is more preferably melamine or a cyanuric acid salt of melamine (melamine cyanurate).

Note that one melamine compound may be used individually, or two or more melamine compounds may be used in combination in a freely selected ratio.

From a viewpoint of even better ensuring safety of an electrochemical device while also further improving adhesiveness of a functional layer, the proportion constituted by the melamine compound in the core particle when the mass of the core particle (i.e., the total mass of the melamine compound and other compounds) is taken to be 100 mass% is preferably 70 mass% or more, more preferably 80 mass% or more, even more preferably 90 mass% or more, particularly preferably 95 mass% or more, and most preferably 100 mass% (i.e., the core particle is most preferably composed of only the melamine compound).

«Other compounds»

No specific limitations are placed on other compounds that can optionally be contained in the core particle so long as the effects disclosed hereinafter are not significantly impaired. For example, the core particle may contain an organic compound, other than the melamine compound, that decomposes at high temperature to release incombustible gas. Examples of such organic compounds include azobisisobutyronitrile, p-toluenesulfonyl hydrazide, 5-methyl-1H-benzotriazole, oxybis(benzenesulfonyl hydrazide), trihydrazine triazine, azodicarbonamide, hydrazo-dicarbonamide, dinitrosopentamethylenetetramine, p-toluenesulfonyl semicarbazide, and p,p'-oxybis(benzenesulfonyl semicarbazide). One other compound may be used individually, or two or more other compounds may be used in combination in a freely selected ratio.

«Proportion constituted by core particle in composite particle»

The proportion constituted by the core particle in the total of the core particle and the shell polymer in the composite particle when the total of the core particle and the shell polymer is taken to be 100 mass% is preferably 50.0 mass% or more, more preferably 60.0 mass% or more, even more preferably 70.0 mass% or more, and particularly preferably 80.0 mass% or more, and is preferably 99.9 mass% or less, more preferably 95.0 mass% or less, and even

more preferably 90.0 mass% or less. Safety of an electrochemical device can be even better ensured when the proportion constituted by the core particle in the total of the core particle and the shell polymer is 50.0 mass% or more, whereas high-temperature storage characteristics of an electrochemical device can be further improved when the proportion constituted by the core particle in the total of the core particle and the shell polymer is 99.9 mass% or less.

<Shell polymer>

The shell polymer is a polymer that can physically or chemically bond to the core particle through adhesion to the outer surface of the core particle so as to at least partially cover the outer surface of the core particle. The shell polymer is joined with the core particle to form a composite particle that is a fine particle.

«Functional group of shell polymer»

The shell polymer is required to include at least one shell functional group selected from the group consisting of a nitrile group, a carboxy group, a hydroxyl group, a sulfo group, an aldehyde group, and an amide group. A polymer that includes any of these shell functional groups can not only impart adhesiveness to a functional layer, but also has good affinity with the above-described core particle containing the melamine compound, and thus can adhere to the core particle so as to cover the outer surface thereof well. Note that the shell polymer may include one type of shell functional group or may include two or more types of shell functional groups. The inclusion of a nitrile group, a carboxy group, or a hydroxyl group as a shell functional group is preferable from a viewpoint of more sufficiently ensuring affinity with the core particle and further improving high-temperature storage characteristics of an electrochemical device, with the inclusion of a nitrile group or a carboxy group as a shell functional group being more preferable. Moreover, the inclusion of a sulfo group as a shell functional group is more preferable from a viewpoint of further improving adhesiveness of a functional layer.

Note that the shell functional group may be in the form of a salt (sodium salt, etc.).

No specific limitations are placed on the method by which any of the shell functional groups described above is introduced into the shell polymer. For example, although a polymer may be produced using a monomer that includes any of the shell functional groups described above (shell functional group-containing monomer) so as to form a polymer that includes a shell functional group-containing monomer unit or any polymer may be modified so as obtain a polymer into which any of the shell functional groups described above has been introduced, the former of these methods is preferable. In other words, from a viewpoint of further improving high-temperature storage characteristics of an electrochemical device, the shell polymer preferably includes at least any one of a nitrile group-containing monomer unit, a carboxy group-containing monomer unit, a hydroxyl group-containing monomer unit, a sulfo group-containing monomer unit, an aldehyde group-containing monomer unit, and an amide group-containing monomer unit, more preferably includes at least any one of a nitrile group-containing monomer unit, a carboxy group-containing monomer unit, and a hydroxyl group-containing monomer unit, and even more preferably includes at least any one of a nitrile group-containing monomer unit and a carboxy group-containing monomer unit.

Moreover, the shell polymer preferably includes a sulfo group-containing monomer unit from a viewpoint of further improving adhesiveness of a functional layer.

The phrase "includes a monomer unit" as used in relation to a polymer in the present disclosure means that "a polymer obtained with the monomer includes a repeating unit derived from the monomer".

[Nitrile group-containing monomer unit]

Examples of nitrile group-containing monomers that can form a nitrile group-containing monomer unit include $\alpha,\beta$-ethylenically unsaturated nitrile monomers. Specifically, any $\alpha,\beta$-ethylenically unsaturated compound that has a nitrile group can be used as an $\alpha,\beta$-ethylenically unsaturated nitrile monomer without any specific limitations. Examples include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile. Note that one nitrile group-containing monomer may be used individually, or two or more nitrile group-containing monomers may be used in combination in a freely selected ratio.

[Carboxy group-containing monomer unit]

Examples of carboxy group-containing monomers that can form a carboxy group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, $\alpha$-acetoxyacrylic

acid, β-trans-aryloxyacrylic acid, and α-chloro-β-E-methoxyacrylic acid.
Examples of dicarboxylic acids include maleic acid, fumaric acid, and itaconic acid.
Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.
Examples of acid anhydrides of dicarboxylic acids include maleic anhydride, acrylic anhydride, methylmaleic anhydride, and dimethylmaleic anhydride.
An acid anhydride that produces a carboxy group through hydrolysis can also be used as a carboxy group-containing monomer. Of these examples, acrylic acid and methacrylic acid are preferable as carboxy group-containing monomers. Note that one carboxy group-containing monomer may be used individually, or two or more carboxy group-containing monomers may be used in combination in a freely selected ratio.

[Hydroxyl group-containing monomer unit]

Examples of hydroxyl group-containing monomers that can form a hydroxyl group-containing monomer unit include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula $CH_2=CR^a-COO-(C_qH_{2q}O)_p-H$ (where p represents an integer of 2 to 9, q represents an integer of 2 to 4, and $R^a$ represents a hydrogen atom or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; (meth)allyl thioethers of alkylene glycols such as (meth)allyl-2-hydroxyethyl thioether and (meth)allyl-2-hydroxypropyl thioether; and hydroxyl group-containing amides such as N-hydroxymethylacrylamide (N-methylolacrylamide), N-hydroxymethylmethacrylamide, N-hydroxyethylacrylamide, and N-hydroxyethylmethacrylamide. Note that one hydroxyl group-containing monomer may be used individually, or two or more hydroxyl group-containing monomers may be used in combination in a freely selected ratio.
In the present disclosure, "(meth)allyl" is used to indicate "allyl" and/or "methallyl", and "(meth)acryloyl" is used to indicate "acryloyl" and/or "methacryloyl".

[Sulfo group-containing monomer unit]

Examples of sulfo group-containing monomers that can form a sulfo group-containing monomer unit include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid. Note that one sulfo group-containing monomer may be used individually, or two or more sulfo group-containing monomers may be used in combination in a freely selected ratio.

[Aldehyde group-containing monomer unit]

Examples of aldehyde group-containing monomers that can form an aldehyde group-containing monomer unit include acrolein. Note that one aldehyde group-containing monomer may be used individually, or two or more aldehyde group-containing monomers may be used in combination in a freely selected ratio.

[Amide group-containing monomer unit]

Examples of amide group-containing monomers that can form an amide group-containing monomer unit include acrylamide, methacrylamide, and vinyl pyrrolidone. Note that one amide group-containing monomer may be used individually, or two or more amide group-containing monomers may be used in combination in a freely selected ratio.
When the amount of all repeating units included in the shell polymer is taken to be 100 mass%, the proportional content of a shell functional group-containing monomer unit in the shell polymer is preferably 20 mass% or more, more

preferably 30 mass% or more, even more preferably 50 mass% or more, and particularly preferably 70 mass% or more from a viewpoint of further improving high-temperature storage characteristics of an electrochemical device. The upper limit for the proportional content of a shell functional group-containing monomer unit in the shell polymer is not specifically limited and can be set as 100 mass% or less, or can be set as 99 mass% or less.

[Other repeating units]

The shell polymer may include repeating units other than the shell functional group-containing monomer units described above (i.e., other repeating units). Examples of such other repeating units include, but are not specifically limited to, an aromatic vinyl monomer unit such as a styrene unit, a (meth)acrylic acid ester monomer unit such as an n-butyl acrylate unit, an aliphatic conjugated diene monomer unit such as a 1,3-butadiene unit, and a hydrogenated aliphatic conjugated diene monomer unit obtained through hydrogenation of an aliphatic conjugated diene monomer unit.
Note that the shell polymer may include one type of other repeating unit or may include two or more types of other repeating units.

«Production method of shell polymer»

No specific limitations are placed on the method by which the shell polymer is produced. For example, the shell polymer may be produced by polymerizing a monomer composition containing one monomer or two or more monomers in an aqueous solvent and then optionally performing hydrogenation and/or modification. Note that the proportional content of each monomer in the monomer composition can be set in accordance with the desired proportional content of a monomer unit (repeating unit) in the polymer.
The polymerization method is not specifically limited and may, for example, be any of solution polymerization, suspension polymerization, bulk polymerization, and emulsion polymerization. Moreover, reactions such as ionic polymerization, radical polymerization, living radical polymerization, various types of condensation polymerization, and addition polymerization can be adopted as the polymerization reaction. Known emulsifiers and polymerization initiators can be used in the polymerization as necessary. Moreover, known methods can be used to perform hydrogenation and modification.

«Type of shell polymer»

From a viewpoint of further improving high-temperature storage characteristics of an electrochemical device, the shell polymer is, for example, preferably polyacrylonitrile (polymer comprising more than 50 mass% of acrylonitrile units), polyvinylpyrrolidone (polymer comprising more than 50 mass% of vinyl pyrrolidone units), an acrylic acid-acrylamide copolymer (polymer comprising more than 50 mass%, in total, of acrylic acid units and acrylamide units), or an acrylic acid-3-allyloxy-2-hydroxypropane sulfonic acid copolymer (polymer comprising more than 50 mass%, in total, of acrylic acid units and 3-allyloxy-2-hydroxypropane sulfonic acid units), and is more preferably polyacrylonitrile, an acrylic acid-acrylamide copolymer, or an acrylic acid-3-allyloxy-2-hydroxypropane sulfonic acid copolymer.

«Degree of swelling in electrolyte solution»

The degree of swelling in electrolyte solution of the shell polymer is preferably 100 mass% or more, and is preferably 600 mass% or less, more preferably 500 mass% or less, even more preferably 400 mass% or less, and particularly preferably 300 mass% or less. When the degree of swelling in electrolyte solution is within any of the ranges set forth above, a chemical reaction between the melamine compound in the core particle and electrolyte solution is suppressed as a result of swelling of the shell polymer in electrolyte solution being inhibited, and thus high-temperature storage characteristics of an electrochemical device can be further improved.
Note that the degree of swelling in electrolyte solution of the shell polymer can be adjusted by, for example, altering the types and/or ratio of monomers used to form the shell polymer.

«Proportion constituted by shell polymer in composite particle»

The proportion constituted by the shell polymer in the total of the core particle and the shell polymer in the composite particle when the total of the core particle and the shell polymer is taken to be 100 mass% is preferably 0.1 mass% or more, more preferably 5.0 mass% or more, and even more preferably 8.5 mass% or more, and is preferably 50.0 mass% or less, more preferably 40.0 mass% or less, even more preferably 30.0 mass% or less, and particularly preferably 20.0 mass% or less. High-temperature storage characteristics of an electrochemical device can be further improved when the proportion constituted by the shell polymer in the total of the core particle and the shell polymer is

0.1 mass% or more, whereas safety of an electrochemical device can be even better ensured when the proportion constituted by the shell polymer in the total of the core particle and the shell polymer is 50.0 mass% or less.

<Production method of composite particle>

No specific limitations are placed on the method by which the composite particle having a structure in which the core particle is covered by the shell polymer is produced so long as a material forming the core portion (core material) and a material forming the shell portion (shell material) are granulated to enable formation of the specific core-shell structure. Examples of methods that may be used include fluidized bed granulation, spray granulation, coagulant precipitation, pH precipitation, and dry mixing.

The method by which the composite particle is produced is preferably spray granulation or dry mixing.

«Spray granulation»

In spray granulation, a slurry composition containing the core material, the shell material, and an aqueous medium such as water can be spray dried to obtain fine particles having the specific core-shell structure. In terms of the specific procedure, a slurry composition is prepared by mixing the core material, the shell material, and the aqueous medium, and then this slurry composition sprayed and dried to form composite particles.

The means of mixing of the core material, the shell material, and the aqueous medium may be a mixer such as a ball mill, a sand mill, a bead mill, a pigment disperser, a grinding machine, an ultrasonic disperser, a homogenizer, or a planetary mixer. The mixing is normally performed in a range of from room temperature to 80°C for from 10 minutes to several hours. The solid content concentration of the slurry composition obtained by the mixing described above is not specifically limited but is preferably 1 mass% or more, more preferably 5 mass% or more, and particularly preferably 10 mass% or more, and is preferably 50 mass% or less, more preferably 40 mass% or less, and particularly preferably 30 mass% or less.

By using a spray dryer to spray the slurry composition obtained by mixing as described above, droplets of the sprayed slurry composition are dried inside a drying tower. This causes the shell material to bond to the outer surface of the core material contained in the droplets and thereby enable the formation of composite particles in which the outer surface of a core particle is at least partially covered by the shell polymer. The temperature of the sprayed slurry composition is normally room temperature, but the slurry composition may be heated to a higher temperature than room temperature. The hot air temperature during spray drying is normally 80°C to 250°C, and preferably 100°C to 200°C.

«Dry mixing»

In dry mixing, the core material and the shell material can be mixed with a solid content concentration during mixing of 80 mass% or more to obtain fine particles having the specific core-shell structure.

The method of dry mixing of the core material and the shell material may be a vessel stirring method using a rocking mixer, a tumbler mixer, or the like in which contents are mixed through shaking and/or rotation of a vessel itself; a mechanical stirring method using a horizontal cylinder mixer, a V-type mixer, a ribbon mixer, a conical screw mixer, a high speed fluid mixer, a rotating disk mixer, a high speed rotating blade mixer, or the like that is a mixer in which a blade, rotating disk, screw, or the like for stirring is attached inside a vessel to a horizontal or vertical rotating axle; an airflow stirring method in which a powder is mixed in a fluidized bed using swirling airflow by compressed gas; or the like. Moreover, a mixer in which any of these mechanisms are used individually or in combination can be used. Furthermore, after dry mixing has been performed, pulverization may be performed to an extent that breaks up aggregation using a mortar or the like.

<Properties of composite particle>

The initial thermal decomposition temperature of the composite particle is preferably 120°C or higher, more preferably 150°C or higher, even more preferably 200°C or higher, and particularly preferably 260°C or higher, and is preferably 500°C or lower, more preferably 400°C or lower, and even more preferably 350°C or lower. When the initial thermal decomposition temperature of the composite particle is 120°C or higher, thermal decomposition of the composite particle (particularly the core particle) other than at abnormally high temperature can be inhibited, and adhesiveness of a functional layer can be sufficiently improved. On the other hand, when the initial thermal decomposition temperature of the composite particle is 500°C or lower, safety of an electrochemical device can be even better ensured.

Note that the initial thermal decomposition temperature of the composite particle can be adjusted by, for example, altering the types and/or ratio of the melamine compound and other optionally contained compounds in the core particle. The initial thermal decomposition temperature of the composite particle can also be adjusted by altering the proportion

constituted by the core particle (or the shell polymer) in the total of the core particle and the shell polymer.

The water content of the composite particle is preferably 3.0 mass% or less, more preferably 1.0 mass% or less, even more preferably 0.5 mass% or less, particularly preferably 0.1 mass% or less, and most preferably 0 mass% (below the limit of detection).

Note that the water content of the composite particle can be measured by the Karl Fischer method.

Although the shell polymer may completely or partially cover the outer surface of the core particle in the composite particle as previously described, the proportion in which the shell polymer is present at the outer surface of the composite particle (proportion of area where the shell polymer is present at the outer surface of the composite particle relative to the area of the entire outer surface; also referred to as the "ratio of coverage") is preferably not less than 50% and not more than 100%, and more preferably not less than 70% and not more than 100%, when the area of the entire outer surface of the composite particle is taken to be 100%, from a viewpoint of sufficiently ensuring high-temperature storage characteristics of an electrochemical device.

Note that the "ratio of coverage" of composite particles referred to in the present disclosure can be determined by observing composite particles that are a collection of particles using a scanning electron microscope and calculating an average value for 10 particles that are arbitrarily selected from the composite particles.

In addition, the volume-average particle diameter D50 of the composite particles is preferably 0.01 μm or more, and more preferably 0.10 μm or more, and is preferably 5.00 μm or less, and more preferably 2.50 μm or less.

The term "volume-average particle diameter D50" as used in the present disclosure refers to the particle diameter at which, in a particle size distribution (by volume) measured by laser diffraction, cumulative volume calculated from a small diameter end of the distribution reaches 50%.

(Binder composition for electrochemical device functional layer)

The presently disclosed binder composition is a composition in which presently disclosed composite particles such as set forth above are dispersed in a solvent. The presently disclosed binder composition can optionally further contain a binder for a functional layer and other components. By using the presently disclosed binder composition, it is possible to form a functional layer having excellent adhesiveness, and by using a device member that includes this functional layer, it is possible to produce an electrochemical device that has sufficiently ensured safety and excellent high-temperature storage characteristics.

Note that in the presently disclosed binder composition for an electrochemical device functional layer and also in the presently disclosed conductive material paste for an electrode mixed material layer and presently disclosed slurry for an electrode mixed material layer that are described further below (hereinafter, also referred to collectively using the phrase "binder composition or the like"), the composite particles maintain a core-shell structure in which the outer surface of a core particle is at least partially covered by a shell polymer. However, some of the shell polymer may detach from the core particle in the presently disclosed binder composition or the like and thus be present separately from the composite particle in a dispersed and/or dissolved state in the solvent.

<Solvent>

The solvent of the binder composition may be water or an organic solvent. Examples of organic solvents that can be used include acetonitrile, N-methylpyrrolidone, acetylpyridine, cyclopentanone, N,N-dimethylacetamide, dimethylformamide, dimethyl sulfoxide, methylformamide, methyl ethyl ketone, furfural, and ethylenediamine. Of these solvents, N-methylpyrrolidone (NMP) is most preferable as an organic solvent from a viewpoint of ease of handling, safety, and ease of synthesis.

Note that one solvent may be used individually, or two or more solvents may be used as a mixture.

<Binder for functional layer>

The binder composition can further contain a binder for a functional layer. By using a binder composition that contains a binder for a functional layer in addition to the composite particles to form a functional layer, adhesiveness of the obtained functional layer can be further improved. Note that in the present disclosure, the binder for a functional layer is considered to not be inclusive of a melamine compound.

«Functional group of binder for functional layer»

From a viewpoint of further improving adhesiveness of a functional layer, the binder for a functional layer is preferably a polymer that includes at least one selected from the group consisting of a carboxy group, a hydroxyl group, a nitrile group, an amino group, an epoxy group, an oxazoline group, an isocyanate group, a sulfo group, an ester group,

and an amide group (hereinafter, these functional groups are also referred to collectively using the term "binder functional group"). The polymer forming the binder for a functional layer may include one of these types of binder functional groups or may include two or more of these types of binder functional groups. A carboxy group, a hydroxyl group, and a nitrile group are preferable as binder functional groups from a viewpoint of even further improving adhesiveness of a functional layer, with a carboxy group and a nitrile group being more preferable.

No specific limitations are placed on the method by which any of the binder functional groups described above is introduced into the binder for a functional layer. For example, although a monomer including any of the binder functional groups described above (binder functional group-containing monomer) may be used to produce a polymer so as to obtain a polymer that includes a binder functional group-containing monomer unit or any polymer may be modified so as to obtain a polymer into which any of the binder functional groups described above has been introduced, the former of these methods is preferable. In other words, the binder for a functional layer preferably includes at least any one of a carboxy group-containing monomer unit, a hydroxyl group-containing monomer unit, a nitrile group-containing monomer unit, an amino group-containing monomer unit, an epoxy group-containing monomer unit, an oxazoline group-containing monomer unit, an isocyanate group-containing monomer unit, a sulfo group-containing monomer unit, an ester group-containing monomer unit, and an amide group-containing monomer unit, more preferably includes at least any one of a carboxy group-containing monomer unit, a hydroxyl group-containing monomer unit, and a nitrile group-containing monomer unit, and even more preferably includes at least any one of a carboxy group-containing monomer unit and a nitrile group-containing monomer unit.

[Carboxy group-containing monomer unit]

Examples of carboxy group-containing monomers that can form a carboxy group-containing monomer unit include the same carboxy group-containing monomers as previously described in the "Composite particle for electrochemical device functional layer" section. Note that one carboxy group-containing monomer may be used individually, or two or more carboxy group-containing monomers may be used in combination in a freely selected ratio.

[Hydroxyl group-containing monomer unit]

Examples of hydroxyl group-containing monomers that can form a hydroxyl group-containing monomer unit include the same hydroxyl group-containing monomers as previously described in the "Composite particle for electrochemical device functional layer" section. Note that one hydroxyl group-containing monomer may be used individually, or two or more hydroxyl group-containing monomers may be used in combination in a freely selected ratio.

[Nitrile group-containing monomer unit]

Examples of nitrile group-containing monomers that can form a nitrile group-containing monomer unit include the same nitrile group-containing monomers as previously described in the "Composite particle for electrochemical device functional layer" section. Note that one nitrile group-containing monomer may be used individually, or two or more nitrile group-containing monomers may be used in combination in a freely selected ratio.

[Amino group-containing monomer unit]

Examples of amino group-containing monomers that can form an amino group-containing monomer unit include dimethylaminoethyl (meth)acrylate, diethylaminoethyl (meth)acrylate, aminoethyl vinyl ether, and dimethylaminoethyl vinyl ether. Note that one amino group-containing monomer may be used individually, or two or more amino group-containing monomers may be used in combination in a freely selected ratio.

In the present disclosure, "(meth)acrylate" is used to indicate "acrylate" and/or "methacrylate".

[Epoxy group-containing monomer unit]

Examples of epoxy group-containing monomers that can form an epoxy group-containing monomer unit include monomers that include a carbon-carbon double bond and an epoxy group.

Examples of monomers that include a carbon-carbon double bond and an epoxy group include unsaturated glycidyl ethers such as vinyl glycidyl ether, allyl glycidyl ether, butenyl glycidyl ether, and o-allylphenyl glycidyl ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl-4-heptenoate, glycidyl sorbate, glycidyl linoleate,

glycidyl-4-methyl-3-pentenoate, glycidyl ester of 3-cyclohexenecarboxylic acid, and glycidyl ester of 4-methyl-3-cyclohexenecarboxylic acid. Note that one epoxy group-containing monomer may be used individually, or two or more epoxy group-containing monomers may be used in combination in a freely selected ratio.

[Oxazoline group-containing monomer unit]

Examples of oxazoline group-containing monomers that can form an oxazoline group-containing monomer unit include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline. Note that one oxazoline group-containing monomer may be used individually, or two or more oxazoline group-containing monomers may be used in combination in a freely selected ratio.

[Isocyanate group-containing monomer unit]

Examples of isocyanate group-containing monomers that can form an isocyanate group-containing monomer unit include 2-acryloyloxyethyl isocyanate and 2-methacryloyloxyethyl isocyanate. Note that one isocyanate group-containing monomer unit may be used individually, or two or more isocyanate group-containing monomer units may be used in combination in a freely selected ratio.

[Sulfo group-containing monomer unit]

Examples of sulfo group-containing monomers that can form a sulfo group-containing monomer unit include the same sulfo group-containing monomers as previously described in the "Composite particle for electrochemical device functional layer" section. Note that one sulfo group-containing monomer may be used individually, or two or more sulfo group-containing monomers may be used in combination in a freely selected ratio.

[Ester group-containing monomer unit]

Examples of ester group-containing monomers that can form an ester group-containing monomer unit include (meth)acrylic acid ester monomers. Examples of (meth)acrylic acid ester monomers include acrylic acid alkyl esters such as methyl acrylate, ethyl acrylate, n-propyl acrylate, isopropyl acrylate, butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate. Note that one ester group-containing monomer may be used individually, or two or more ester group-containing monomers may be used in combination in a freely selected ratio.

Also note that in a case in which a certain monomer includes a binder functional group (or shell functional group) other than an ester group, that monomer is considered to not be included among ester group-containing monomers in the present disclosure.

[Amide group-containing monomer unit]

Examples of amide group-containing monomers that can form an amide group-containing monomer unit include the same amide group-containing monomers as previously described in the "Composite particle for electrochemical device functional layer" section. Note that one amide group-containing monomer may be used individually, or two or more amide group-containing monomers may be used in combination in a freely selected ratio.

The proportional content of a binder functional group-containing monomer unit in the binder for a functional layer when the amount of all repeating units included in the binder for a functional layer is taken to be 100 mass% is preferably 20 mass% or more, more preferably 30 mass% or more, even more preferably 50 mass% or more, and particularly preferably 70 mass% or more from a viewpoint of further improving adhesiveness of a functional layer. Note that the upper limit for the proportional content of a binder functional group-containing monomer unit in the binder for a functional layer is not specifically limited and can be set as 100 mass% or less.

[Other repeating units]

The binder for a functional layer may include repeating units other than the binder functional group-containing

monomer units described above (i.e., other repeating units). Examples of such other repeating units include, but are not specifically limited to, repeating units among those listed in the "Composite particle for electrochemical device functional layer" section that do not correspond to a binder functional group-containing monomer unit. Note that the binder for a functional layer may include one type of other repeating unit or may include two or more types of other repeating units.

«Production method of binder for functional layer»

No specific limitations are placed on the method by which the binder for a functional layer is produced. For example, the binder for a functional layer may be produced by polymerizing a monomer composition containing one monomer or two or more monomers in an aqueous solvent and then optionally performing hydrogenation and/or modification. Note that the proportional content of each monomer in the monomer composition can be set in accordance with the desired proportional content of a monomer unit (repeating unit) in the polymer.

The polymerization method is not specifically limited and may, for example, be any of solution polymerization, suspension polymerization, bulk polymerization, and emulsion polymerization. Moreover, reactions such as ionic polymerization, radical polymerization, living radical polymerization, various types of condensation polymerization, and addition polymerization can be adopted as the polymerization reaction. Known emulsifiers and polymerization initiators can be used in the polymerization as necessary. Moreover, known methods can be used to perform hydrogenation and modification.

«Type of binder for functional layer»

Polyacrylonitrile, polybutyl acetal (polyvinyl formal, polyvinyl butyral, etc.), polyvinylpyrrolidone, or the like, for example, can preferably be used as the binder for a functional layer from a viewpoint of further improving adhesiveness of a functional layer, with polyvinylpyrrolidone and polyacrylonitrile being more preferable, and polyacrylonitrile even more preferable.

Note that a known binder that does not include any of the binder functional groups described above (polyvinylidene fluoride, etc.) can be used as the binder for a functional layer.

«Amount of binder for functional layer»

The presently disclosed binder composition preferably contains 30 parts by mass or more, more preferably 40 parts by mass or more, and even more preferably 50 parts by mass or more of a binder for a functional layer (particularly a binder for a functional layer including any of the binder ’functional groups described above) per 100 parts by mass of the previously described composite particles, and preferably contains 2,000 parts by mass or less, more preferably 400 parts by mass or less, and even more preferably 250 parts by mass or less of the binder for a functional layer per 100 parts by mass of the composite particles. Adhesiveness of a functional layer can be further improved while also even further improving high-temperature storage characteristics of an electrochemical device by using 30 parts by mass or more of the binder for a functional layer per 100 parts by mass of the composite particles in production of the binder composition, whereas an electrochemical device in which good safety is sufficiently ensured can be obtained by using 2,000 parts by mass or less of the binder for a functional layer per 100 parts by mass of the composite particles in production of the binder composition.

<Other components>

Besides the components described above, the presently disclosed binder composition may contain known components such as cross-linkers, reinforcing materials, antioxidants, dispersants, rheology modifiers, and additives for electrolyte solution having a function of inhibiting decomposition of electrolyte solution. The binder composition may contain one other component or may contain two or more other components in freely selected proportions.

<Production method of binder composition>

The presently disclosed binder composition can be produced by mixing the composite particles, the solvent, and also the binder for a functional layer and other components that are used as necessary. Specifically, the binder composition can be produced by dissolving and/or dispersing the composite particles and also the binder for a functional layer and other components that are used as necessary in the solvent. In production of the binder composition, the binder for a functional layer is preferably mixed with the composite particles while in a dissolved state in the solvent. The mixing method used to obtain the binder composition is not specifically limited and can be a method using a typical mixing device such as a disper blade, a mill, or a kneader.

Moreover, production of the binder composition may be performed at the same time as production of the conductive material paste for an electrode mixed material layer described below.

(Conductive material paste for electrode mixed material layer)

The presently disclosed conductive material paste is a composition that contains the presently disclosed binder composition set forth above and a conductive material. In other words, the presently disclosed conductive material paste contains the previously described composite particles, the previously described solvent, and a conductive material, and can optionally contain the previously described binder for a functional layer and the previously described other components. Note that the presently disclosed conductive material paste does not normally contain electrode active material particles.

By using the presently disclosed conductive material paste, it is possible to form an electrode mixed material layer having excellent adhesiveness, and by using an electrode that includes this electrode mixed material layer, it is possible to produce an electrochemical device that has sufficiently ensured safety and excellent high-temperature storage characteristics.

<Conductive material>

The conductive material is a component that, in an electrochemical device, increases the electrical conductivity of an electrode mixed material layer included in an electrode for an electrochemical device. Examples of conductive materials that can be used include, but are not specifically limited to, conductive carbon materials and fibers, foils, and particles of various metals. Examples of conductive carbon materials include carbon black (for example, acetylene black, Ketjenblack® (Ketjenblack is a registered trademark in Japan, other countries, or both), and furnace black), single-walled or multi-walled carbon nanotubes (multi-walled carbon nanotubes are inclusive of cup-stacked carbon nanotubes), carbon nanohorns, vapor-grown carbon fiber, milled carbon fiber obtained by pyrolyzing and then pulverizing polymer fiber, single layer or multilayer graphene, and carbon nonwoven fabric sheet obtained through pyrolysis of nonwoven fabric made from polymer fiber.

Note that one conductive material may be used individually, or two or more conductive materials may be used in combination in a freely selected ratio.

The specific surface area of the conductive material is preferably 30 $m^2/g$ or more, and more preferably 40 $m^2/g$ or more, and is preferably 2,000 $m^2/g$ or less, more preferably 1,500 $m^2/g$ or less, even more preferably 1,000 $m^2/g$ or less, and particularly preferably 500 $m^2/g$ or less. Through the specific surface area of the conductive material being 30 $m^2/g$ or more, an electrode mixed material layer having excellent electrical conductivity can be formed even when the content of the conductive material is small. On the other hand, dispersibility of the conductive material can be increased through the specific surface area of the conductive material being 2,000 $m^2/g$ or less.

The specific surface area of the conductive material referred to in the present disclosure is the nitrogen adsorption specific surface area measured by the BET method and can be measured in accordance with ASTM D3037-81.

The presently disclosed conductive material paste preferably contains 10 parts by mass or more, more preferably 20 parts by mass or more, and even more preferably 30 parts by mass or more of the conductive material per 100 parts by mass of the composite particles, and preferably contains 2,000 parts by mass or less, more preferably 400 parts by mass or less, and even more preferably 350 parts by mass or less of the conductive material per 100 parts by mass of the composite particles. By using not less than 10 parts by mass and not more than 2,000 parts by mass of the conductive material per 100 parts by mass of the composite particles in production of the conductive material paste, the conductive material can be dispersed well in the conductive material paste. Moreover, the conductive material paste can be used to form an electrode mixed material layer that sufficiently ensures safety of an electrochemical device while also causing the electrochemical device to display excellent device characteristics (rate characteristics, etc.).

<Production method of conductive material paste>

The presently disclosed conductive material paste can be produced by mixing the binder composition and the conductive material. The mixing method used to obtain the conductive material paste is not specifically limited and may be a method using a typical mixing device such as a disper blade, a mill, or a kneader.

The solid content concentration of the conductive material paste is preferably 3 mass% or more, more preferably 5 mass% or more, and even more preferably 10 mass% or more, and is preferably 50 mass% or less, more preferably 40 mass% or less, and even more preferably 30 mass% or less.

(Slurry for electrode mixed material layer)

The presently disclosed slurry for an electrode mixed material layer is a composition that contains the conductive material paste set forth above and electrode active material particles. In other words, the presently disclosed slurry for an electrode mixed material layer contains electrode active material particles, the previously described composite particles, the previously described solvent, and the previously described conductive material, and can optionally contain the previously described binder for a functional layer and the previously described other components.
By using the presently disclosed slurry for an electrode mixed material layer, it is possible to form an electrode mixed material layer having excellent adhesiveness, and by using an electrode that includes this electrode mixed material layer, it is possible to produce an electrochemical device that has sufficiently ensured safety and excellent high-temperature storage characteristics.

<Electrode active material particles>

The electrode active material particles are particles formed of a material that gives and receives electrons in an electrode of an electrochemical device. In a case in which the electrochemical device is a lithium ion secondary battery, for example, the electrode active material is normally a material that can occlude and release lithium.
Although the following describes, as one example, a case in which the slurry for an electrode mixed material layer is a slurry for an electrode mixed material layer of a lithium ion secondary battery electrode, the presently disclosed slurry for an electrode mixed material layer is not limited to the following example.

«Positive electrode active material particles»

A positive electrode active material that forms positive electrode active material particles may be lithium-containing cobalt oxide ($LiCoO_2$), lithium manganate ($LiMn_2O_4$), lithium-containing nickel oxide ($LiNiO_2$), a lithium-containing complex oxide of Co-Ni-Mn, a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a lithium-rich spinel compound represented by $Li_{1+x}Mn_{2-x}O_4$ ($0 < x < 2$), $Li[Ni_{0.17}Li_{0.2}Co_{0.07}Mn_{0.56}]O_2$, $LiNi_{0.5}Mn_{1.5}O_4$, or the like without any specific limitations.
The particle diameter of the positive electrode active material particles is not specifically limited and can be the same as that of conventionally used positive electrode active material particles.

«Negative electrode active material particles»

A negative electrode active material forming negative electrode active material particles may be a carbon-based negative electrode active material, a metal-based negative electrode active material, a negative electrode active material that is a combination thereof, or the like without any specific limitations.
The particle diameter of the negative electrode active material particles is not specifically limited and can be the same as that of conventionally used negative electrode active material particles.

[Carbon-based negative electrode active material]

A carbon-based negative electrode active material can be defined as an active material that contains carbon as its main framework and into which lithium can be inserted (also referred to as "doping"). Examples of carbon-based negative electrode active materials include carbonaceous materials and graphitic materials.

-Carbonaceous material-

Examples of carbonaceous materials include graphitizing carbon and non-graphitizing carbon, typified by glassy carbon, which has a structure similar to an amorphous structure.
The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.
Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

-Graphitic material-

Examples of graphitic materials include natural graphite and artificial graphite.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher. Note that natural graphite that is at least partially coated with amorphous carbon at the surface thereof (amorphous-coated natural graphite) may be used as a carbon-based negative electrode active material.

[Metal-based negative electrode active material]

A metal-based negative electrode active material is an active material that includes a metal, that normally includes an element in the structure thereof that enables insertion or alloying of lithium, and that has a theoretical current capacity per unit mass of 500 mAh/g or more when lithium is inserted or alloyed. Examples of the metal-based active material include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti); alloys of the simple substance of metal; and oxides, sulfides, nitrides, silicides, carbides, and phosphides of lithium metal, the simple substance of metal, and the alloys of the simple substance of metal. Of these metal-based negative electrode active materials, active materials containing silicon (silicon-based negative electrode active materials) are preferred. One reason for this is that the capacity of a lithium ion secondary battery can be increased through use of a silicon-based negative electrode active material.

-Silicon-based negative electrode active material-

Examples of silicon-based negative electrode active materials include silicon (Si), a silicon-containing alloy, SiO, $SiO_x$, and a composite material of conductive carbon and a Si-containing material obtained by coating or combining the Si-containing material with the conductive carbon.

No specific limitations are placed on the quantitative ratio of the electrode active material particles and the composite particles in the presently disclosed slurry for an electrode mixed material layer. For example, the slurry for an electrode mixed material layer preferably contains 0.1 parts by mass or more, and more preferably 0.5 parts by mass or more of the composite particles per 100 parts by mass of the electrode active material particles, and preferably contains 20 parts by mass or less, and more preferably 4 parts by mass or less of the composite particles per 100 parts by mass of the electrode active material particles. The safety of an electrochemical device can be even better ensured by compounding the conductive material paste in an amount such that the composite particles are 0.1 parts by mass or more per 100 parts by mass of the electrode active material particles in production of the slurry for an electrode mixed material layer, whereas device characteristics (for example, rate characteristics) of an electrochemical device can be sufficiently ensured by compounding the conductive material paste in an amount such that the composite particles are 20 parts by mass or less per 100 parts by mass of the electrode active material particles in production of the slurry for an electrode mixed material layer.

<Production method of slurry for electrode mixed material layer>

The presently disclosed slurry for an electrode mixed material layer can be produced by mixing the conductive material paste set forth above and the electrode active material particles. The mixing can be performed using a known mixer such as a ball mill, a sand mill, a bead mill, a pigment disperser, a grinding machine, an ultrasonic disperser, a homogenizer, a planetary mixer, or a FILMIX.

(Electrode for electrochemical device)

The presently disclosed electrode for an electrochemical device includes a current collector and an electrode mixed material layer formed on the current collector. The electrode mixed material layer is a dried product of the presently disclosed slurry for an electrode mixed material layer. Note that the presently disclosed electrode for an electrochemical device may optionally include other layers besides the electrode mixed material layer (for example, an adhesive layer and/or a porous membrane layer). The presently disclosed electrode for an electrochemical device can be used as an electrode of an electrochemical device such as a lithium ion secondary battery, an electric double-layer capacitor, or a lithium ion capacitor.

By using the presently disclosed electrode, it is possible to produce an electrochemical device that has sufficiently ensured safety and excellent high-temperature storage characteristics.

<Current collector>

The current collector included in the electrode for an electrochemical device is not specifically limited so long as it is a material having electrical conductivity and electrochemical durability, and may be selected in accordance with the type of electrochemical device. In a case in which the electrode for an electrochemical device is an electrode for a lithium ion secondary battery, the material forming the current collector may be iron, copper, aluminum, nickel, stainless steel, titanium, tantalum, gold, platinum, or the like. Of these materials, copper foil is particularly preferable as a current collector used for a negative electrode. On the other hand, aluminum foil is particularly preferable as a material forming a current collector used for a positive electrode.

Note that one of these materials may be used individually, or two or more of these materials may be used in combination in a freely selected ratio.

<Electrode mixed material layer>

The electrode mixed material layer formed using the presently disclosed slurry for an electrode mixed material layer is a dried product of the slurry for an electrode mixed material layer.

Components that are contained in the electrode mixed material layer are components that were contained in the presently disclosed slurry for an electrode mixed material layer, and the preferred ratio of these components is the same as the preferred ratio of the components in the presently disclosed slurry for an electrode mixed material layer.

<Production method of electrode for electrochemical device>

No specific limitations are placed on the method by which the electrode for an electrochemical device is produced. For example, the electrode for an electrochemical device can be produced through a step of applying the slurry for an electrode mixed material layer onto at least one side of the current collector (application step) and a step of drying the slurry for an electrode mixed material layer that has been applied onto at least one side of the current collector to form an electrode mixed material layer on the current collector (drying step).

«Application step»

The method by which the slurry for an electrode mixed material layer is applied onto the current collector is not specifically limited and may be a commonly known method. Specific examples of application methods that can be used include doctor blading, dip coating, reverse roll coating, direct roll coating, gravure coating, extrusion coating, and brush coating. The thickness of the slurry coating on the current collector after application but before drying may be set as appropriate in accordance with the thickness of the electrode mixed material layer to be obtained through drying.

«Drying step»

The method by which the slurry for an electrode mixed material layer on the current collector is dried is not specifically limited and may be a commonly known method. Examples of drying methods that can be used include drying by warm, hot, or low-humidity air; drying in a vacuum; and drying by irradiation with infrared light, electron beams, or the like. Through drying of the slurry for an electrode mixed material layer on the current collector in this manner, an electrode mixed material layer can be formed on the current collector to thereby obtain an electrode for an electrochemical device that includes the current collector and the electrode mixed material layer.

After the drying step, the electrode mixed material layer may be further subjected to a pressing process, such as mold pressing or roll pressing. The pressing process can improve close adherence between the electrode mixed material layer and the current collector.

(Electrochemical device)

A feature of the presently disclosed electrochemical device is that it includes the electrode for an electrochemical device set forth above. The presently disclosed electrochemical device may, for example, be a lithium ion secondary battery, an electric double-layer capacitor, or a lithium ion capacitor, but is not specifically limited thereto, and is preferably a lithium ion secondary battery. As a result of the presently disclosed electrochemical device including the presently disclosed electrode, the presently disclosed electrochemical device inhibits thermal runaway and maintains a high level of safety while also having excellent high-temperature storage characteristics.

Although the following describes, as one example, a case in which the electrochemical device is a lithium ion secondary battery, the presently disclosed electrochemical device is not limited to the following example. A lithium ion

secondary battery that is an example of the presently disclosed electrochemical device normally includes electrodes (positive electrode and negative electrode), an electrolyte solution, and a separator, and has the presently disclosed electrode for an electrochemical device as at least one of the positive electrode and the negative electrode.

<Electrodes>

Examples of electrodes other than the presently disclosed electrode for an electrochemical device set forth above that can be used in the lithium ion secondary battery that is an example of the presently disclosed electrochemical device include known electrodes without any specific limitations. Specifically, an electrode obtained by forming an electrode mixed material layer on a current collector by a known production method may be used as an electrode other than the electrode for an electrochemical device set forth above.

<Electrolyte solution>

The electrolyte solution is normally an organic electrolyte solution obtained by dissolving a supporting electrolyte in an organic solvent. The supporting electrolyte may, for example, be a lithium salt. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of suitable organic solvents include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

The concentration of the electrolyte in the electrolyte solution can be adjusted as appropriate and is, for example, preferably 0.5 mass% to 15 mass%, more preferably 2 mass% to 13 mass%, and even more preferably 5 mass% to 10 mass%. Known additives such as vinylene carbonate, fluoroethylene carbonate, and ethyl methyl sulfone may be added to the electrolyte solution.

<Separator>

Examples of separators that can be used include, but are not specifically limited to, those described in JP2012-204303A. Of these separators, a microporous membrane formed of polyolefinic (polyethylene, polypropylene, polybutene, or polyvinyl chloride) resin is preferred since such a membrane can reduce the total thickness of the separator, which increases the ratio of electrode active material particles in the lithium ion secondary battery, and consequently increases the volumetric capacity. A functional layer-equipped separator that includes a functional layer (porous membrane layer or adhesive layer) at one side or both sides of a separator substrate may be used as the separator.

Formation of a functional layer of the functional layer-equipped separator can be performed using a known binder and/or non-conductive particles (for example, non-conductive inorganic particles such as alumina).

Moreover, formation of a functional layer of the functional layer-equipped separator can be performed using a binder composition that contains presently disclosed composite particles such as previously described.

<Production method of lithium ion secondary battery>

The lithium ion secondary battery in accordance with the present disclosure can be produced by, for example, stacking the positive electrode and the negative electrode with the separator in-between, performing rolling, folding, or the like of the resultant laminate as necessary in accordance with the battery shape to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to measure or evaluate the degree of swelling in electrolyte solution of a shell polymer, the initial thermal decomposition temperature of composite particles, the adhesiveness of a positive electrode mixed material layer (functional layer), and the safety and high-temperature storage characteristics of a lithium ion secondary battery (electrochemical device).

<Degree of swelling in electrolyte solution>

A water dispersion of a shell polymer was applied onto a sheet made of polytetrafluoroethylene and was dried in an environment having a temperature of 80°C to 120°C for 3 hours to 8 hours to obtain a cast film having a thickness of 500 μm ± 50 μm. The cast film was cut up and approximately 1 g thereof was precisely weighed. The mass of the resultant film piece was taken to be W0. The film piece was immersed in electrolyte solution for measurement in an environment having a temperature of 60°C for 72 hours to cause swelling of the film piece. Note that the electrolyte solution for measurement was a solution obtained by dissolving $LiPF_6$ with a concentration of 1.0 mol/L in a mixed solvent obtained by further adding 2 volume% of vinylene carbonate as an additive to a mixed liquid in which ethylene carbonate (EC) and diethyl carbonate (DEC) were mixed in a mass ratio of EC/DEC = 3/7. The film piece was subsequently pulled out of the electrolyte solution, electrolyte solution on the surface of the film piece was gently wiped off, and the mass of the film piece was then measured. The mass of the swollen film piece was taken to be W1, and the degree of swelling in electrolyte solution was calculated using the following calculation formula.

$$\text{Degree of swelling in electrolyte solution (mass\%)} = \{(W1 - W0)/W0\} \times 100$$

In Tables 1 and 2, which are described further below, the degree of swelling in electrolyte solution is denoted using the following ranks A to D.

A: Degree of swelling in electrolyte solution of not less than 100 mass% and not more than 300 mass%
B: Degree of swelling in electrolyte solution of more than 300 mass% and not more than 400 mass%
C: Degree of swelling in electrolyte solution of more than 400 mass% and not more than 500 mass%
D: Degree of swelling in electrolyte solution of more than 500 mass%

<Initial thermal decomposition temperature>

In thermogravimetric analysis using a thermogravimetric analyzer (produced by Rigaku Corporation; product name: TG8110), the mass of composite particles was measured while heating the composite particles from 25°C to 500°C at a heating rate of 20°C/min in an air atmosphere, and the temperature (5% mass loss temperature) at which the measured mass reached 95% of the mass at the start of measurement (25°C) was taken to be the initial thermal decomposition temperature of the composite particles.

<Adhesiveness>

A positive electrode for a lithium ion secondary battery produced in each example or comparative example was cut out as a rectangle of 100 mm in length and 10 mm in width to obtain a test specimen. The test specimen was placed with a surface at which the positive electrode mixed material layer was present facing downward, and the surface at the positive electrode mixed material layer-side of the test specimen was affixed to a test stage (base plate made of SUS) through cellophane tape (tape in accordance with JIS Z1522). Thereafter, the stress (N/m) when the current collector was peeled off by pulling one end of the current collector in a perpendicular direction at a pulling speed of 50 mm/min was measured (note that the cellophane tape was fixed to the test stage).

Three measurements were performed in the same manner, and an average value thereof was determined as

the positive electrode peel strength and was evaluated by the following standard.

A larger value for the positive electrode peel strength indicates that the positive electrode mixed material layer has better adhesiveness and has strong close adherence to the current collector.

«Evaluation standard»

SA: Positive electrode peel strength of 35 N/m or more
A: Positive electrode peel strength of not less than 30 N/m and less than 35 N/m
B: Positive electrode peel strength of not less than 25 N/m and less than 30 N/m
C: Positive electrode peel strength of not less than 20 N/m and less than 25 N/m
D: Positive electrode peel strength of less than 20 N/m

<Safety>

The safety of a lithium ion secondary battery was evaluated by an internal short circuit test described below.

A porous membrane layer-equipped separator obtained as described below (substrate: polypropylene; porous membrane layer thickness: 4 μm; having 1 cm square hole opened therein) was sandwiched between a positive electrode for a lithium ion secondary battery and a negative electrode for a lithium ion secondary battery produced in each example or comparative example (each equipped with a tab), and these members were sealed in an aluminum pouch to produce a cell. A circular tube (SUS) of 8 mm in diameter was used to apply a force of 10 N to the part where a hole was opened in the porous membrane layer-equipped separator of the cell so as to create an enforced internal short circuit part. A direct current stabilized power supply (produced by Kikusui Electronics Corporation; product name: PWR1201L) was then used to apply 10 V with respect to the positive electrode tab and the negative electrode tab of the cell, during which, the current and voltage were monitored. The resistance was calculated from the current and voltage, and the time (×100 resistance time) taken for the resistance to increase by a factor of 100 from straight after application of the voltage of 10 V was measured. An evaluation was made by the following standard.

«Evaluation standard»

A: ×100 resistance time of less than 5 s
B: ×100 resistance time of not less than 5 s and less than 10 s
C: ×100 resistance time of not less than 10 s and less than 15 s
D: ×100 resistance time of 15 s or more

«Production of porous membrane layer-equipped separator»

A separator made of a single layer of polypropylene (produced by Celgard, LLC.; product name: #2500) was prepared as a separator substrate.

A composition for a porous membrane layer was produced by mixing 6.0 parts in terms of solid content of an acrylic polymer as a binder, 1.5 parts in terms of solid content of an acrylamide polymer into which a carboxy group had been introduced (POLYSTRON® 117 (POLYSTRON is a registered trademark in Japan, other countries, or both) produced by Arakawa Chemical Industries, Ltd.) as a thickener, and 0.2 parts in terms of solid content of a polyethylene glycol surfactant (SAN NOPCO® SN WET 366 (SAN NOPCO is a registered trademark in Japan, other countries, or both) produced by San Nopco Limited) with 100 parts of alumina filler (LS256 produced by Nippon Light Metal Co., Ltd.) as non-conductive particles.

The composition for a porous membrane layer obtained as described above was applied onto one side of the separator substrate described above using a wire bar and was dried at 60°C for 10 minutes. This yielded a porous membrane layer-equipped separator having a porous membrane layer thickness of 4 μm.

<High-temperature storage characteristics>

A lithium ion secondary battery was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion

secondary battery was subsequently discharged to a cell voltage of 3.00 V by a 0.2C constant-current method at a temperature of 25°C. Thereafter, the lithium ion secondary battery was CC-CV charged (upper limit cell voltage: 4.20 V) by a 0.2C constant-current method and CC discharged to 3.00 V by a 0.2C constant-current method. This charging and discharging at 0.2C was repeated three times. The discharge capacity obtained in the final repetition of charging and discharging was taken to be X1.

The lithium ion secondary battery was subsequently charged to a cell voltage of 4.20 V at 25°C and was left in that state in an environment having a temperature of 60°C for 2 weeks. Thereafter, the lithium ion secondary battery was discharged to a cell voltage of 3.00 V by a 0.2C constant-current method at 25°C. This discharge capacity was taken to be X2.

A capacity maintenance rate expressed by $\Delta C = (X2/X1) \times 100(\%)$ was determined using the discharge capacity X1 and the discharge capacity X2 and was evaluated by the following standard. A larger value for the capacity maintenance rate $\Delta C$ indicates better high-temperature storage characteristics.

«Evaluation standard»

A: $\Delta C$ of 85% or more
B: $\Delta C$ of not less than 83% and less than 85%
C: $\Delta C$ of not less than 80% and less than 83%
D: $\Delta C$ of less than 80%

(Example 1)

<Preparation of core material>

Melamine cyanurate was prepared as a core material forming core particles.

<Production of shell polymer (polymer A)>

A reactor A equipped with a mechanical stirrer and a condenser was charged with 85 parts of deionized water and 0.2 parts of sodium dodecylbenzenesulfonate in a nitrogen atmosphere, these materials were heated to 55°C under stirring, and 0.3 parts of potassium persulfate was added into the reactor A in the form of a 5.0% aqueous solution. Next, a separate vessel B equipped with a mechanical stirrer was charged with 94.0 parts of acrylonitrile as a nitrile group-containing monomer, 1.0 parts of acrylamide as an amide group-containing monomer, 2.0 parts of acrylic acid as a carboxy group-containing monomer, 3.0 parts of n-butyl acrylate as a (meth)acrylic acid ester monomer, 0.6 parts of sodium dodecylbenzenesulfonate, 0.035 parts of t-dodecyl mercaptan, 0.4 parts of polyoxyethylene lauryl ether, and 80 parts of deionized water in a nitrogen atmosphere, and these materials were stirred and emulsified to produce a monomer mixture. The monomer mixture was added into the reactor A over 5 hours at a constant rate while in a stirred and emulsified state, and a reaction was carried out until the polymerization conversion rate reached 95% to yield a water dispersion of a shell polymer (shell material) that was polyacrylonitrile. The degree of swelling in electrolyte solution of the shell polymer was measured. The result is shown in Table 1.

<Production of composite particles>

The solid content concentration of the water dispersion of the shell polymer obtained as described above was adjusted to obtain a water dispersion having a solid content concentration of 28%.

A Homo Mixer was charged with 80 parts of the melamine cyanurate as a core material and 20 parts in terms of solid content of the water dispersion of the shell polymer that had undergone solid content concentration adjustment, the total solid content concentration was adjusted to 20% with deionized water, and stirred mixing was performed to yield a slurry composition.

The obtained slurry composition was supplied into a spray dryer (produced by Ohkawara Kakohki Co., Ltd.; product name: OC-16) and was spray dried using a rotating disk atomizer (diameter: 65 mm) under conditions of a rotation speed of 25,000 rpm, a hot air temperature of 150°C, and a particle collection outlet temperature of 90°C to obtain composite particles. Upon observation of the composite particles using a scanning electron microscope (SEM), outer surfaces of the core particles were confirmed to be completely covered by the shell polymer. In addition, the initial thermal decomposition temperature of the composite particles was measured. The result is shown in Table 1.

<Production of binder for functional layer>

A water dispersion of a binder for a functional layer that was polyacrylonitrile (polymer A) was obtained in the same way as in the "Production of shell polymer" section. An appropriate amount of NMP was added to the obtained water dispersion of the binder for a functional layer (polymer A) to obtain a mixture. This mixture was then subjected to vacuum distillation at 90°C to remove water and excess NMP from the mixture, and thereby yield an NMP solution (solid content concentration: 8%) of the binder for a functional layer (polymer A).

<Production of conductive material paste>

In a dry room having a dew point of -40°C, 100 parts of acetylene black (BET specific surface area: 68 $m^2/g$) as a conductive material, 40 parts of the composite particles obtained as described above, 40 parts in terms of solid content of the binder for a functional layer, and an appropriate amount of NMP as a solvent were stirred by a disper blade (3,000 rpm, 60 minutes) and were then mixed at a circumferential speed of 8 m/s for 1 hour using a bead mill in which zirconia beads of 0.3 mm in diameter were used so as to produce a conductive material paste. Note that the conductive material paste had a solid content concentration of 15.0 mass%. Also note that a binder composition and a conductive material paste were produced at the same time through these operations.

<Production of slurry for positive electrode mixed material layer>

A slurry for a positive electrode mixed material layer was obtained by mixing 100 parts of an active material NMC532 based on a lithium complex oxide of Co-Ni-Mn ($LiNi_{0.5}Mn_{0.3}Co_{0.2}O_2$) as positive electrode active material particles, 3.75 parts in terms of solid content of the conductive material paste produced as described above, and 2.0 parts in terms of solid content of polyvinylidene fluoride (PVDF) (produced by Kureha Corporation; product name: L#7208) as a known binder not including a binder functional group in a planetary mixer, further gradually adding NMP, and performing stirred mixing at a temperature of 25 ± 3°C and a rotation speed of 60 rpm such that the viscosity at 60 rpm (M4 rotor) and 25 ± 3°C measured by a B-type viscometer was 3,600 mPa·s.

<Production of positive electrode>

The slurry for a positive electrode mixed material layer obtained as described above was applied onto aluminum foil of 20 μm in thickness serving as a current collector by a comma coater such as to have a coating weight of 20 ± 0.5 $mg/cm^2$.

The aluminum foil was conveyed inside an oven having a temperature of 90°C for 2 minutes and an oven having a temperature of 120°C for 2 minutes at a speed of 200 mm/min so as to dry the slurry for a positive electrode mixed material layer on the aluminum foil and thereby obtain a positive electrode web having a positive electrode mixed material layer formed on the current collector.

The positive electrode mixed material layer-side of the produced positive electrode web was subsequently roll pressed with a line pressure of 14 t (tons) in an environment having a temperature of 25 ± 3°C to obtain a positive electrode having a positive electrode mixed material layer density of 3.20 $g/cm^3$. Adhesiveness of the positive electrode mixed material layer was evaluated for the obtained positive electrode. The obtained positive electrode was also used with the negative electrode described below to evaluate safety of a lithium ion secondary battery. The results are shown in Table 1.

<Production of negative electrode>

A 5 MPa pressure-resistant vessel equipped with a stirrer was charged with 63 parts of styrene as an aromatic vinyl monomer, 34 parts of 1,3-butadiene as an aliphatic conjugated diene monomer, 2 parts of itaconic acid as a carboxy group-containing monomer, 1 part of 2-hydroxyethyl acrylate as a hydroxyl group-containing monomer, 0.3 parts of t-dodecyl mercaptan as a molecular weight modifier, 5 parts of sodium dodecylbenzenesulfonate as an emulsifier, 150 parts of deionized water as a solvent, and 1 part of potassium persulfate as a polymerization initiator. These materials were sufficiently stirred and were then heated to 55°C to initiate polymerization. Cooling was performed to quench the reaction at the point at which monomer consumption reached 95.0%. The water dispersion containing a polymer that was obtained in this manner was adjusted to pH 8 through addition of 5% sodium hydroxide aqueous solution. Unreacted monomer was subsequently removed through thermal-vacuum distillation. Thereafter, cooling was performed to a temperature of 30°C or lower to yield a water dispersion (binder composition for a negative electrode) containing a binder for a negative electrode.

A planetary mixer was charged with 48.75 parts of artificial graphite (theoretical capacity: 360 mAh/g) and 48.75

parts of natural graphite (theoretical capacity: 360 mAh/g) as negative electrode active material particles and with 1 part in terms of solid content of carboxymethyl cellulose as a thickener. These materials were diluted to a solid content concentration of 60% with deionized water and were then kneaded at a rotation speed of 45 rpm for 60 minutes. Thereafter, 1.5 parts in terms of solid content of the binder composition for a negative electrode obtained as described above was added and was kneaded therewith at a rotation speed of 40 rpm for 40 minutes. Deionized water was then added to adjust the viscosity to 3,000 ± 500 mPa·s (measured at 25°C and 60 rpm using a B-type viscometer) and thereby produce a slurry composition for a negative electrode.

The slurry composition for a negative electrode was applied onto the surface of copper foil of 15 μm in thickness serving as a current collector by a comma coater such as to have a coating weight of 11 ± 0.5 mg/cm$^2$. The copper foil onto which the slurry composition for a negative electrode had been applied was subsequently conveyed inside an oven having a temperature of 80°C for 2 minutes and an oven having a temperature of 110°C for 2 minutes at a speed of 400 mm/min so as to dry the slurry composition for a negative electrode on the copper foil, and thereby obtain a negative electrode web having a negative electrode mixed material layer formed on the current collector.

The negative electrode mixed material layer-side of the produced negative electrode web was subsequently roll pressed with a line pressure of 11 t (tons) in an environment having a temperature of 25 ± 3°C to obtain a negative electrode having a negative electrode mixed material layer density of 1.60 g/cm$^3$.

<Preparation of separator>

A separator made of a single layer of polypropylene (produced by Celgard, LLC.; product name: #2500) was prepared.

<Production of lithium ion secondary battery>

The positive electrode, the negative electrode, and the separator were used to produce a single-layer laminate cell (initial design discharge capacity: equivalent to 30 mAh) and were arranged inside aluminum packing. The aluminum packing was subsequently filled with $LiPF_6$ solution of 1.0 M in concentration (solvent: mixed solvent of ethylene carbonate (EC)/diethyl carbonate (DEC) = 3/7 (mass ratio); additive: containing 2 volume% (solvent ratio) of vinylene carbonate) as an electrolyte solution. The aluminum packing was then closed by heat sealing at a temperature of 150°C to tightly seal an opening of the aluminum packing, and thereby produce a lithium ion secondary battery. High-temperature storage characteristics were evaluated for the obtained lithium ion secondary battery. The result is shown in Table 1.

(Example 2)

Composite particles, a binder for a functional layer (polymer A), a conductive material paste, a slurry for a positive electrode mixed material layer, a positive electrode, a negative electrode, a separator, and a lithium ion secondary battery were prepared, and various evaluations were performed in the same way as in Example 1 with the exception that a shell polymer produced as described below was used in production of the composite particles. The results are shown in Table 1.

<Production of shell polymer (polymer B)>

An autoclave equipped with a stirrer was charged with 240 parts of deionized water, 2.5 parts of sodium alkylbenzene sulfonate, 20 parts of acrylonitrile as a nitrile group-containing monomer, 10 parts of styrene as an aromatic vinyl monomer, and 5 parts of methacrylic acid as a carboxy group-containing monomer in this order, and the inside of a bottle was purged with nitrogen. Thereafter, 65 parts of 1,3-butadiene as an aliphatic conjugated diene monomer was injected, 0.25 parts of ammonium persulfate was added, and a polymerization reaction was carried out at a reaction temperature of 40°C. This yielded a polymer including acrylonitrile units, styrene units, methacrylic acid units, and 1,3-butadiene units. The polymerization conversion rate was 85% and the iodine value was 280 mg/100 mg.

A stirrer-equipped autoclave having a capacity of 1 L was charged with 400 mL (total solid content: 48 g) of a solution obtained by adjusting the obtained polymer to a total solid content concentration of 12% using water, nitrogen gas was passed through the autoclave for 10 minutes to remove dissolved oxygen in the solution, and then 75 mg of palladium acetate as a hydrogenation reaction catalyst was dissolved in 180 mL of deionized water to which 4 molar equivalents of nitric acid relative to the Pd had been added and was added into the autoclave. After purging the system twice with hydrogen gas, the contents of the autoclave were heated to 50°C in a state in which the pressure was raised to 3 MPa with hydrogen gas, and a hydrogenation reaction (first stage hydrogenation reaction) was carried out for 6 hours. The iodine value of the polymer at this point was 45 mg/100 mg.

Next, the autoclave was restored to atmospheric pressure, and a further 25 mg of palladium acetate as a

hydrogenation reaction catalyst was dissolved in 60 mL of water to which 4 molar equivalents of nitric acid relative to the Pd had been added and was added into the autoclave. After purging the system twice with hydrogen gas, the contents of the autoclave were heated to 50°C in a state in which the pressure was raised to 3 MPa with hydrogen gas, and a hydrogenation reaction (second stage hydrogenation reaction) was carried out for 6 hours to yield a water dispersion of a shell polymer (shell material) including acrylonitrile units, styrene units, methacrylic acid units, and hydrogenated 1,3-butadiene units.

(Example 3)

Composite particles, a binder for a functional layer (polymer A), a conductive material paste, a slurry for a positive electrode mixed material layer, a positive electrode, a negative electrode, a separator, and a lithium ion secondary battery were prepared, and various evaluations were performed in the same way as in Example 1 with the exception that polyvinylpyrrolidone (produced by Wako Pure Chemical Industries, Ltd.; special grade reagent; product name: Polyvinylpyrrolidone K30; polymer C) was used as a shell polymer in production of the composite particles. The results are shown in Table 1.

(Example 4)

Composite particles, a binder for a functional layer (polymer A), a conductive material paste, a slurry for a positive electrode mixed material layer, a positive electrode, a negative electrode, a separator, and a lithium ion secondary battery were prepared, and various evaluations were performed in the same way as in Example 1 with the exception that a shell polymer produced as described below was used in production of the composite particles. The results are shown in Table 1.

<Production of shell polymer (polymer D)>

A 1 L flask equipped with a septum was charged with 720 g of deionized water. The deionized water was heated to a temperature of 40°C, and the inside of the flask was purged with nitrogen gas at a flow rate of 100 mL/min. Next, 10 parts of deionized water, 30 parts of acrylic acid as a carboxy group-containing monomer, and 70 parts of acrylamide as an amide group-containing monomer were mixed and were injected into the flask by a syringe. Thereafter, 8 parts of a 2.5% aqueous solution of potassium persulfate as a polymerization initiator was added into the flask by a syringe. After 15 minutes had passed, 22 parts of a 2.0% aqueous solution of tetramethylethylenediamine as a polymerization accelerator was added by a syringe. After 4 hours had passed, 4 parts of a 2.5% aqueous solution of potassium persulfate as a polymerization initiator was added into the flask, 11 parts of a 2.0% aqueous solution of tetramethylethylenediamine as a polymerization accelerator was further added, and the polymerization reaction was allowed to proceed under heating to a temperature of 60°C. After 3 hours had passed, the flask was opened to air to terminate the polymerization reaction, and the product was deodorized at a temperature of 80°C to remove residual monomer. The product was then adjusted to pH 8 using a 10% aqueous solution of lithium hydroxide to yield a water dispersion of a shell polymer (shell material) that was an acrylic acid-acrylamide copolymer.

(Example 5)

Composite particles, a binder for a functional layer (polymer A), a conductive material paste, a slurry for a positive electrode mixed material layer, a positive electrode, a negative electrode, a separator, and a lithium ion secondary battery were prepared, and various evaluations were performed in the same way as in Example 1 with the exception that the amount of melamine cyanurate was changed to 97 parts and the amount in terms of solid content of the shell polymer was changed to 3 parts in production of the composite particles. The results are shown in Table 1.

Upon observation of the composite particles using a scanning electron microscope (SEM), outer surfaces of the core particles were confirmed to be partially covered by the shell polymer.

(Example 6)

Composite particles, a binder for a functional layer (polymer A), a conductive material paste, a slurry for a positive electrode mixed material layer, a positive electrode, a negative electrode, a separator, and a lithium ion secondary battery were prepared, and various evaluations were performed in the same way as in Example 1 with the exception that ammeline was used instead of melamine cyanurate in production of the composite particles. The results are shown in Table 1.

Upon observation of the composite particles using a scanning electron microscope (SEM), outer surfaces of

the core particles were confirmed to be partially covered by the shell polymer.

(Example 7)

Composite particles, a binder for a functional layer (polymer A), a slurry for a positive electrode mixed material layer, a positive electrode, a negative electrode, a separator, and a lithium ion secondary battery were prepared, and various evaluations were performed in the same way as in Example 1 with the exception that a conductive material paste was produced as described below. The results are shown in Table 1.

<Production of conductive material paste>

In a dry room having a dew point of -40°C, 100 parts of acetylene black (BET specific surface area: 68 $m^2/g$) as a conductive material, 60 parts of composite particles obtained in the same way as in Example 1, 20 parts in terms of solid content of a binder for a functional layer (polymer A) obtained in the same way as in Example 1, and NMP as an organic solvent were added, were stirred by a disper blade (3,000 rpm, 60 minutes), and were subsequently mixed at a circumferential speed of 8 m/s for 1 hour using a bead mill in which zirconia beads of 0.3 mm in diameter were used so as to produce a conductive material paste. Note that the conductive material paste had a solid content concentration of 15.0 mass%.

(Example 8)

Composite particles, a conductive material paste, a slurry for a positive electrode mixed material layer, a positive electrode, a negative electrode, a separator, and a lithium ion secondary battery were prepared, and various evaluations were performed in the same way as in Example 1 with the exception that polyvinylpyrrolidone (produced by Wako Pure Chemical Industries, Ltd.; special grade reagent; product name: Polyvinylpyrrolidone K30; polymer C) was used instead of the binder for a functional layer that was polyacrylonitrile (polymer A) in production of the conductive material paste. The results are shown in Table 1.

(Example 9)

Composite particles, a binder for a functional layer (polymer A), a conductive material paste, a slurry for a positive electrode mixed material layer, a positive electrode, a negative electrode, a separator, and a lithium ion secondary battery were prepared, and various evaluations were performed in the same way as in Example 1 with the exception that a shell polymer produced as described below was used in production of the composite particles. The results are shown in Table 2.

<Production of shell polymer (polymer E)>

A glass separable flask having an internal capacity of 500 mL that was equipped with a paddle blade (paddle type rotating blade made of SUS316) stirrer, a reflux condenser, and four dripping devices was charged with 76 g of deionized water, and the deionized water was heated to the boiling point/reflux temperature. Next, 166.04 g of a mixture of 159.28 g of a 37% aqueous solution of sodium acrylate and 6.76 g of an 80% aqueous solution of acrylic acid, 81.9 g of a 40% aqueous solution of sodium 3-allyloxy-2-hydroxypropane sulfonate, 26.6 g of a 10% aqueous solution of sodium persulfate, and 44.5 g of a 2% aqueous solution of hydrogen peroxide were each separately added dropwise under stirring by adding the mixture of the sodium acrylate aqueous solution and the acrylic acid aqueous solution over 140 minutes, the sodium 3 -allyloxy-2-hydroxypropane sulfonate aqueous solution over 120 minutes, the sodium persulfate aqueous solution over 160 minutes, and the hydrogen peroxide aqueous solution over 140 minutes. Once this dropwise addition had ended, the boiling point/reflux temperature was maintained over 30 minutes to complete polymerization and thereby yield a pale yellow and transparent aqueous solution of a water-soluble copolymer (acrylic acid-sulfonic acid copolymer; shell material).

(Example 10)

A shell polymer (polymer E), a binder for a functional layer (polymer A), a conductive material paste, a slurry for a positive electrode mixed material layer, a positive electrode, a negative electrode, a separator, and a lithium ion secondary battery were prepared, and various evaluations were performed in the same way as in Example 9 with the exception that composite particles were produced as described below. The results are shown in Table 2.

<Production of composite particles>

The solid content concentration of the aqueous solution of the shell polymer (polymer E) was adjusted to obtain an aqueous solution having a solid content concentration of 50%.

A dry mixer (FM Mixer produced by Nippon Coke & Engineering Co., Ltd.) was supplied with 80 parts of melamine cyanurate as a core material, and the melamine cyanurate was stirred at a circumferential speed of 40 m/s. While the melamine cyanurate was being stirred, 20 parts (in terms of solid content) of the aqueous solution of the polymer E described above was supplied into the dry mixer by spraying over 30 minutes to obtain composite particles. Upon observation of the composite particles using a scanning electron microscope (SEM), outer surfaces of the core particles were confirmed to be completely covered by the shell polymer.

(Example 11)

A shell polymer (polymer E), a binder for a functional layer (polymer A), a conductive material paste, a slurry for a positive electrode mixed material layer, a positive electrode, a negative electrode, a separator, and a lithium ion secondary battery were prepared, and various evaluations were performed in the same way as in Example 9 with the exception that composite particles were produced as described below. The results are shown in Table 2.

<Production of composite particles>

The solid content concentration of the aqueous solution of the shell polymer (polymer E) was adjusted to obtain an aqueous solution having a solid content concentration of 50%.

A fluidized bed granulator (AGGLOMASTER® (AGGLOMASTER is a registered trademark in Japan, other countries, or both) produced by Hosokawa Micron Corporation) was supplied with 80 parts of melamine cyanurate as a core material, and the melamine cyanurate was fluidized in 80°C airflow. While the melamine cyanurate was being fluidized, 20 parts (in terms of solid content) of the aqueous solution of the polymer E described above was supplied into the fluidized bed granulator by spraying over 30 minutes to obtain composite particles. Upon observation of the composite particles using a scanning electron microscope (SEM), outer surfaces of the core particles were confirmed to be completely covered by the shell polymer.

(Comparative Example 1)

A binder for a functional layer (polymer A), a slurry for a positive electrode mixed material layer, a positive electrode, a negative electrode, a separator, and a lithium ion secondary battery were prepared, and various evaluations were performed in the same way as in Example 1 with the exception that a shell polymer and composite particles were not produced, and a conductive material paste was produced as described below. The results are shown in Table 2.

<Production of conductive material paste>

In a dry room having a dew point of -40°C, 100 parts of acetylene black (BET specific surface area: 68 $m^2/g$) as a conductive material, 40 parts of melamine cyanurate, 40 parts in terms of solid content of a binder for a functional layer (polymer A) obtained in the same way as in Example 1, and NMP as an organic solvent were added, were stirred by a disper blade (3,000 rpm, 60 minutes), and were subsequently mixed at a circumferential speed of 8 m/s for 1 hour using a bead mill in which zirconia beads of 0.3 mm in diameter were used to produce a conductive material paste. Note that the conductive material paste had a solid content concentration of 15.0 mass%.

(Comparative Example 2)

A binder for a functional layer (polymer A), a positive electrode, a negative electrode, a separator, and a lithium ion secondary battery were prepared, and various evaluations were performed in the same way as in Example 1 with the exception that a shell polymer and composite particles were not produced, and a conductive material paste and a slurry for a positive electrode mixed material layer were produced as described below. The results are shown in Table 2.

<Production of conductive material paste>

A conductive material paste was produced in the same way as in Comparative Example 1.

<Production of slurry for positive electrode mixed material layer>

A slurry for a positive electrode mixed material layer was obtained by mixing 100 parts of an active material NMC532 based on a lithium complex oxide of Co-Ni-Mn ($LiNi_{0.5}Mn_{0.3}Co_{0.2}O_2$) as positive electrode active material particles, 3.75 parts in terms of solid content of the conductive material paste produced as described above, 2.0 parts in terms of solid content of polyvinylidene fluoride (PVDF) (produced by Kureha Corporation; product name: L#7208) as a known binder not including a binder functional group, and 0.2 parts in terms of solid content of the polymer A in a planetary mixer, further gradually adding NMP, and performing stirred mixing at a temperature of 25 ± 3°C and a rotation speed of 60 rpm such that the viscosity at 60 rpm (M4 rotor) and 25 ± 3°C measured by a B-type viscometer was 3,600 mPa·s.

(Comparative Examples 3 and 4)

Composite particles, a conductive material paste, a slurry for a positive electrode mixed material layer, a positive electrode, a negative electrode, a separator, and a lithium ion secondary battery were prepared, and various evaluations were performed in the same way as in Example 1 with the exception that azobisisobutyronitrile (Comparative Example 3) or azodicarbonamide (Comparative Example 4) was used instead of melamine cyanurate in production of the composite particles. The results are shown in Table 2.

In Tables 1 and 2, shown below:

"MC" indicates melamine cyanurate;
"AM" indicates ammeline;
"AIBN" indicates azobisisobutyronitrile;
"ADCA" indicates azodicarbonamide;
"Polymer A" indicates polyacrylonitrile;
"Polymer B" indicates polymer including acrylonitrile units, styrene units, methacrylic acid units, and hydrogenated 1,3-butadiene units;
"Polymer C" indicates polyvinylpyrrolidone;
"Polymer D" indicates acrylic acid-acrylamide copolymer;
"Polymer E" indicates acrylic acid-sulfonic acid copolymer; and "PVDF" indicates polyvinylidene fluoride.

Table 1

| | | | | Example 1 | Example 2 | Example 3 | Example 4 | Example 5 | Example 6 | Example 7 | Example 8 |
|---|---|---|---|---|---|---|---|---|---|---|---|
| Conductive material paste | Composite particles, etc. | Core particles | Melamine compound, etc. | MC | MC | MC | MC | MC | AM | MC | MC |
| | | | Proportion (in core + shell) [mass%] | 80 | 80 | 80 | 80 | 97 | 80 | 80 | 80 |
| | | Shell polymer | Type | Polymer A | Polymer B | Polymer C | Polymer D | Polymer A | Polymer A | Polymer A | Polymer A |
| | | | Proportion (in core + shell) [mass%] | 20 | 20 | 20 | 20 | 3 | 20 | 20 | 20 |
| | | | Degree of swelling in electrolyte solution | A | C | B | A | A | A | A | A |
| | | Initial thermal decomposition temperature [°C] | | 280 | 280 | 280 | 280 | 260 | 300 | 280 | 280 |
| | | Production method | | Spray drying | Spray drying | Spray drying | Spray drying | Spray drying | Spray drying | Spray drying | Spray drying |
| | Binder | Type | | Polymer A | Polymer A | Polymer A | Polymer A | Polymer A | Polymer A | Polymer A | Polymer C |
| | Composite particles, etc.Binder (mixing ratio in paste production) | | | 40:40 | 40:40 | 40:40 | 40:40 | 40:40 | 40:40 | 60:20 | 40:40 |
| Binder added in production of slurry for positive electrode | | | | PVDF | PVDF | PVDF | PVDF | PVDF | PVDF | PVDF | PVDF |
| Safety | | | | A | A | A | A | A | A | A | A |
| High-temperature storage characteristics | | | | A | C | B | A | B | A | B | A |
| Adhesiveness | | | | A | A | A | A | A | B | C | C |

Table 2

| | | | | Example 9 | Example 10 | Example 11 | Comparative Example 1 | Comparative Example 2 | Comparative Example 3 | Comparative Example 4 |
|---|---|---|---|---|---|---|---|---|---|---|
| Conductive material paste | Composite particles, etc. | Core particles | Melamine compound, etc. | MC | MC | MC | MC | MC | AIBN | ADCA |
| | | | Proportion (in core + shell) [mass%] | 80 | 80 | 80 | | | 80 | 80 |
| | | Shell polymer | Type | Polymer E | Polymer E | Polymer E | | | Polymer A | Polymer A |
| | | | Proportion (in core + shell) [mass%] | 20 | 20 | 20 | | | 20 | 20 |
| | | | Degree of swelling in electrolyte solution | A | A | A | | | A | A |
| | | Initial thermal decomposition temperature [°C] | | 280 | 280 | 280 | 250 | 250 | 100 | 230 |
| | | Production method | | Spray drying | Dry mixing | Fluidized bed granulation | - | - | Spray drying | Spray drying |
| | Binder | Type | | Polymer A | Polymer A | Polymer A | Polymer A | Polymer A | Polymer A | Polymer A |
| | Composite particles, etc. Binder (mixing ratio in paste production) | | | 40:40 | 40:40 | 40:40 | 40:40 | 40:40 | 40:40 | 40:40 |
| Binder added in production of slurry for positive electrode | | | | PVDF | PVDF | PVDF | PVDF | PVDF Polymer A | PVDF | PVDF |
| Safety | | | | A | A | A | A | A | D | A |
| High-temperature storage characteristics | | | | B | A | B | D | D | A | A |
| Adhesiveness | | | | SA | SA | B | A | A | B | D |

It can be seen from Tables 1 and 2 that in Examples 1 to 11 in which a positive electrode mixed material layer was produced using composite particles in which a core particle containing a melamine compound was covered by a polymer including a shell functional group, the obtained positive electrode mixed material layer had excellent adhesiveness, and a lithium ion secondary battery that had sufficiently ensured safety and excellent high-temperature storage characteristics could be produced.

In contrast, it can be seen that high-temperature storage characteristics of a lithium ion secondary battery deteriorated in Comparative Examples 1 and 2 in which a positive electrode mixed material layer was produced using a melamine compound that had not been converted to composite particles. This result demonstrates that even when a melamine compound and a binder for a functional layer are mixed in production of a conductive material paste or a slurry for a positive electrode mixed material layer, composite particles are not formed in the conductive material paste or the slurry for a positive electrode mixed material layer.

It can also be seen that the safety of a lithium ion secondary battery deteriorated in Comparative Example 3 in which a positive electrode mixed material layer was produced using composite particles in which a core particle containing azobisisobutyronitrile but not containing a melamine compound was covered by a polymer including a shell functional group.

It can also be seen from Table 2 that adhesiveness of a positive electrode mixed material layer decreased in Comparative Example 4 in which a positive electrode mixed material layer was produced using composite particles in which a core particle containing azodicarbonamide but not containing a melamine compound was covered by a polymer including a shell functional group.

INDUSTRIAL APPLICABILITY

According to the present disclosure, it is possible to provide a composite particle for an electrochemical device functional layer and a binder composition for an electrochemical device functional layer that can sufficiently ensure adhesiveness of a functional layer and safety of an electrochemical device while, on the other hand, causing an electrochemical device to display excellent high-temperature storage characteristics.

Moreover, according to the present disclosure, it is possible to provide a conductive material paste for an electrode mixed material layer and a slurry for an electrode mixed material layer that can sufficiently ensure adhesiveness of an electrode mixed material layer and safety of an electrochemical device while, on the other hand, causing an electrochemical device to display excellent high-temperature storage characteristics.

Furthermore, according to the present disclosure, it is possible to provide an electrode for an electrochemical device that can sufficiently ensure safety of an electrochemical device while, on the other hand, causing an electrochemical device to display excellent high-temperature storage characteristics.

Also, according to the present disclosure, it is possible to provide an electrochemical device that has sufficiently ensured safety and excellent high-temperature storage characteristics.

REFERENCE SIGNS LIST

| | |
|---|---|
| 100 | composite particle |
| 110 | core particle |
| 110S | outer surface of core particle |
| 120 | shell polymer |

**Claims**

1. A composite particle for an electrochemical device functional layer comprising:

   a core particle containing a melamine compound; and
   a shell polymer that at least partially covers an outer surface of the core particle and that includes at least one selected from the group consisting of a nitrile group, a carboxy group, a hydroxyl group, a sulfo group, an aldehyde group, and an amide group.

2. The composite particle for an electrochemical device functional layer according to claim 1, wherein the shell polymer has a degree of swelling in electrolyte solution of not less than 100 mass% and not more than 600 mass%.

**3.** The composite particle for an electrochemical device functional layer according to claim 1 or 2, having an initial thermal decomposition temperature of not lower than 120°C and not higher than 500°C.

**4.** A binder composition for an electrochemical device functional layer comprising: the composite particle for an electrochemical device functional layer according to any one of claims 1 to 3; and a solvent.

**5.** The binder composition for an electrochemical device functional layer according to claim 4, further comprising a binder for a functional layer.

**6.** The binder composition for an electrochemical device functional layer according to claim 5, wherein the binder for a functional layer is a polymer including at least one selected from the group consisting of a carboxy group, a hydroxyl group, a nitrile group, an amino group, an epoxy group, an oxazoline group, an isocyanate group, a sulfo group, an ester group, and an amide group.

**7.** A conductive material paste for an electrode mixed material layer comprising: the binder composition for an electrochemical device functional layer according to any one of claims 4 to 6; and a conductive material.

**8.** A slurry for an electrode mixed material layer comprising: the conductive material paste for an electrode mixed material layer according to claim 7; and electrode active material particles.

**9.** An electrode for an electrochemical device comprising an electrode mixed material layer on a current collector, wherein the electrode mixed material layer is a dried product of the slurry for an electrode mixed material layer according to claim 8.

**10.** An electrochemical device comprising the electrode for an electrochemical device according to claim 9.

FIG. 1

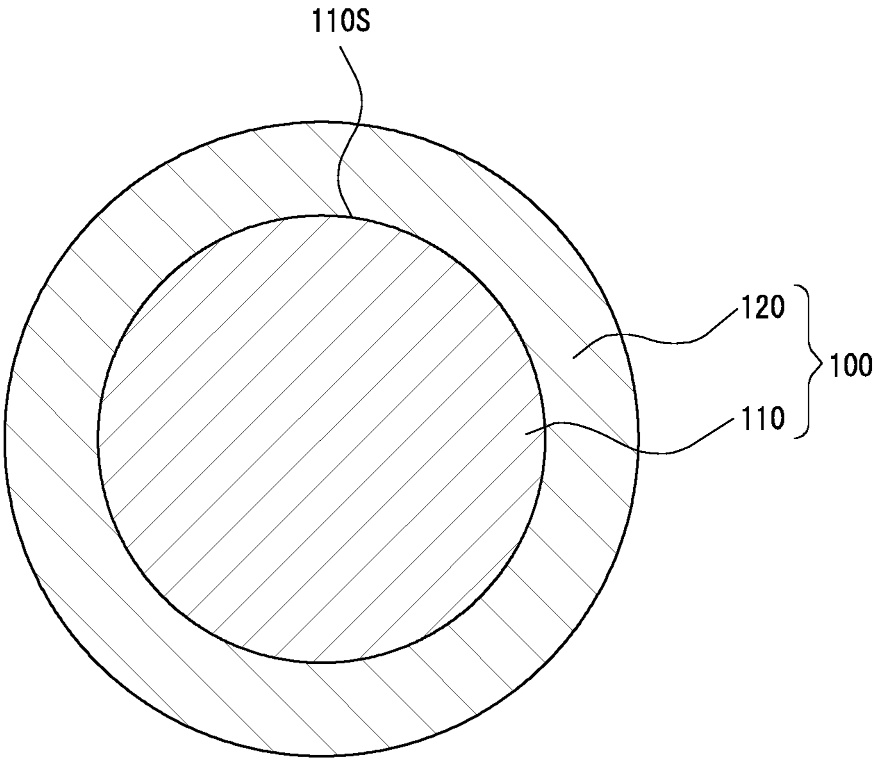

## INTERNATIONAL SEARCH REPORT

International application No. PCT/JP2020/011818

A. CLASSIFICATION OF SUBJECT MATTER
H01M 4/13(2010.01)i; H01M 4/139(2010.01)i; H01M 4/62(2006.01)i; H01G 11/06(2013.01)i; H01G 11/38(2013.01)i
FI: H01M4/62 Z; H01M4/139; H01M4/13; H01G11/06; H01G11/38

According to International Patent Classification (IPC) or to both national classification and IPC

B. FIELDS SEARCHED

Minimum documentation searched (classification system followed by classification symbols)
H01M4/13; H01M4/139; H01M4/62; H01G11/06; H01G11/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | WO 2018/155345 A1 (NIPPON ZEON CO., LTD.) 30.08.2018 (2018-08-30) claims, paragraphs [0021], [0035], [0042], examples | 1-10 |
| X | WO 2019/021891 A1 (NIPPON ZEON CO., LTD.) 31.01.2019 (2019-01-31) claims, paragraphs [0051]-[0052], example 5 | 1-10 |
| X | JP 2018-129121 A (SONY CORP.) 16.08.2018 (2018-08-16) claims, paragraph [0056], examples 1-5, table 1 | 1-10 |
| A | WO 2014;119315 A1 (SANYO ELECTRIC CO., LTD.) 07.08.2014 (2014-08-07) | 1-10 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 June 2020 (02.06.2020) | 16 June 2020 (16.06.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/011818

C (Continuation). DOCUMENTS CONSIDERED TO BE RELEVANT

| Category* | Citation of document, with indication, where appropriate, of the relevant passages | Relevant to claim No. |
|---|---|---|
| A | CN 108134044 A (INNER MONGOLIA XIM YUAN GRAPHENE TECHNOLOGY CO., LTD.) 08.06.2018 (2018-06-08) | 1-10 |

Form PCT/ISA/210 (continuation of second sheet) (January 2015)

**INTERNATIONAL SEARCH REPORT**
Information on patent family members

International application No.
PCT/JP2020/011818

| Patent Documents referred in the Report | Publication Date | Patent Family | Publication Date |
|---|---|---|---|
| WO 2018/155345 A1 | 30 Aug. 2018 | EP 3588636 A1<br>claims, paragraphs [0029], [0058], [0068], examples<br>CN 110268563 A<br>KR 10-2019-0121303 A | |
| WO 2019/021891 A1 | 31 Jan. 2019 | (Family: none) | |
| JP 2018-129121 A | 16 Aug. 2018 | WO 2018/142690 A1<br>CN 110383555 A | |
| WO 2014/119315 A1 | 07 Aug. 2014 | US 2015/0188143 A1<br>US 2018/0047991 A1<br>CN 104584290 A | |
| CN 108134044 A | 08 Jun. 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016181324 A
- JP 2012204303 A